(19) Europäisches Patentamt
European Patent Office
Office européen des brevets

(11) EP 2 034 339 A1

(12) **EUROPEAN PATENT APPLICATION**
published in accordance with Art. 153(4) EPC

(43) Date of publication:
**11.03.2009 Bulletin 2009/11**

(21) Application number: **07742001.6**

(22) Date of filing: **19.04.2007**

(51) Int Cl.:
***G02B 5/30*** *(2006.01)* ***B32B 7/02*** *(2006.01)*
***B60J 3/06*** *(2006.01)* ***C03C 27/12*** *(2006.01)*

(86) International application number:
**PCT/JP2007/058565**

(87) International publication number:
**WO 2007/145022 (21.12.2007 Gazette 2007/51)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **16.06.2006 JP 2006167964**

(71) Applicant: **FUJIFILM Corporation**
**Minato-ku**
**Tokyo 106-8620 (JP)**

(72) Inventors:
- **KAMADA, Koh**
  **Ashigarakami-gun, Kanagawa 258-8577 (JP)**
- **MATSUNAMI, Yuki**
  **Ashigarakami-gun, Kanagawa 258-8577 (JP)**

(74) Representative: **HOFFMANN EITLE**
**Patent- und Rechtsanwälte**
**Arabellastrasse 4**
**81925 München (DE)**

(54) **POLARIZING FILM FOR WINDOW AND FRONT WINDOW FOR VEHICLE**

(57) There is provided a front window for means of traveling, which contains at least a base, a polarizing film, and a antireflection film, wherein the polarizing film contains at least an anisotropic absorber, and the anisotropic absorber has a reduction ratio of a parallel polarized light (s-polarized light) included in incident light of 90% or less.

FIG. 3

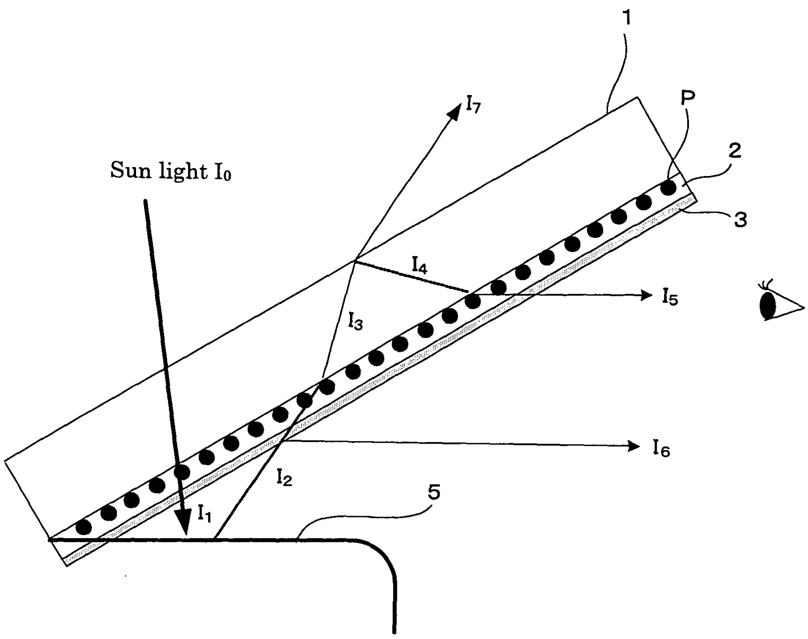


EP 2 034 339 A1

## Description

Technical Field

The present invention relates to a polarizing film which is suitably used for a window of conventional housing or complex housing, a window of means of traveling such as a car, and the like, as well as a front window for means of traveling.

Background Art

There has been a safety issue at the time of driving a car such that the visibility of driver is reduced during day as a result of the reflections of the interior structures such as a dashboard or the like on a windshield of the car. Moreover, contrary to the currently increasing needs for ascetic designs such as use of colors or patterns in a compartment of a car, there still has an inconvenience such that only dark colors can be used for the design of the area around the dashboard due to the problems of background reflections.

To overcome this problem, there has been proposed a laminated glass wherein two glass panels, each coated with an antireflection layer, are laminated so that the antireflection layers face outside, for example, in Patent Literature 1.

Moreover, Patent Literature 2 discloses a reflection-reduced glass for a vehicle, wherein, on at least one surface of a transparent glass substrate, a thin film layer having a refractive index n1 of 1.8 to 1.9 and a thickness of 700Å to 900 Å is laminated as a first layer from the glass surface, a thin film layer having a refractive index n2 of 1.4 to 1.5 and a thickness of 1,100Å to 1,300 Å is laminated as a second layer on the thin film of the first layer, and wherein the reflection on the surface of the thin film layer is reduced at 4.5% to 6.5% with respect to the incident visible light which is incident on the thin film layer at an incident angle of 50 degrees to 70 degrees to the vertical light of the surface.

In case where the low reflection treatment is performed on the outer surface of the wind shield for a vehicle as in Patent Literatures 1 and 2, however, the outer surface of the wind shield is rubbed by wind shield wiper which is used so as to maintain a visibility at the time of driving for safety, then the low reflection treated film is worn out, and therefore it causes a problem such that the characteristics of the optical thin film utilizing interference of light cannot be maintained. The outer surface-treated wind shield of a vehicle has another problem in terms of durability such that the depositions of dirt or the like significantly increases the reflectance due to the change in the conditions of light interference, and the depositions of the dirt becomes visible. If only one side is treated for antireflection, moreover, the backside reflection from the other surface which is not antireflection treated is remained, and the total effect of antireflection is limited to the reduction of approximately 30%, which is not sufficiently satisfactory performance.

Patent Literature 1: Japanese Utility Model Application Laid-Open (JP-U) No. 05-69701
Patent Literature 2: Japanese Patent Application Laid-Open (JP-A) No. 04-357134

Disclosure of Invention

An object of the present invention is to provide a polarizing film for a window, which is suitably used as a front window of means of traveling such as a car, improves a safety as a result of significantly improved the total effect of antireflection, has an excellent light fastness, and improves aesthetic designs of dashboard by preventing reflections of the images of the structures inside the car caused by back reflection. Another object of the present invention is to provide a front window of means of traveling using the aforementioned polarizing film for a window.

After the present inventors had conducted extensive studies in order to solve the aforementioned problems, they discovered the following findings. Namely, as a result of the focused studies on the models of the car which were known to have problems of background reflections, it was found that a tilt angle of a wind shield in the recent models of the car was adjusted to be approximately 30 degrees to a horizontal plane, so as to reduce air resistance at the time of high-speed driving, and thus the recent models of the car had higher reflectance of the light reflected from the dashboard compared to the former models of the car which had the tilt angle of approximately 50 degrees. Moreover, it was fount that the light reflected from the glass surface tilted at the angle of approximately 30 degrees and directed to driver's eyes was a horizontally polarized light (s-polarized light) which had a wave face in the horizontal direction, and thus the light of the background reflection which was scattered on the dashboard, reflected on the back side of the wind shield and came into the driver's eyes could be reduced if s-polarized light could be removed from the incident light of a direct sun light upon the dashboard.

The present invention is based upon the aforementioned findings of the present inventors, and means for solving the aforementioned problems are as follows:

<1> A polarizing film for a window, which contains at least an anisotropic absorber, wherein the polarizing film has a reduction ratio of horizontally polarized light (s-polarized light) included in incident light of 90% or less.

<2> The polarizing film for a window according to <1>, wherein the anisotropic absorber has an average aspect ratio of 1.5 or more, and the anisotropic absorber is orientated so that a major axis of the anisotropic absorber and a horizontal plane of the polarizing film are horizontal.
<3> The polarizing film for a window according to <2>, wherein the major axis of the anisotropic absorber is orientated so as to have an angle of $\pm 30°$ or less with a horizontal plane of the polarizing film.
<4> The polarizing film for a window according to any one of <1> to <3>, wherein the anisotropic absorber is an anisotropic metal nanoparticle, or a carbon nanotube.
<5> The polarizing film for a window according to <4>, wherein a material of the anisotropic metal nanoparticle is at least one selected from the group consisting of gold, silver, copper and aluminum.
<6> A front window for means of traveling, which contains at least: a base; a polarizing film; and a antireflection film, wherein the polarizing film is the polarizing film as in any one of <1> to <5>.
<7> The front window of means of traveling according to <6>, wherein a plane of the base and a horizontal standard plane make an angle of 20 degrees to 50 degrees, and an average direction of an absorbance axis of the anisotropic absorber contained in the polarizing film is orientated at an angle of less than $\pm 30$ degrees to a line at which a plane of the base and the horizontal standard plane are crossed.
<8> The front window of means of traveling according to any one of <6> or <7>, wherein the polarizing film is disposed on a surface of the base which faces inside of the means of traveling.
<9> The front window of means of traveling according to any one of <6> to <8>, wherein the antireflection film is disposed at an outermost surface of the front window which faces inside of the means of traveling.
<10> The front window of means of traveling according to any one of <6> to <9>, wherein the base is a laminated glass which comprises two sheets of plate glass and an intermediate layer disposed in between the two sheets of the plate glass, and wherein the intermediate layer comprises the polarizing film.
<11> The front window of means of traveling according to any one of <6> to <10>, wherein the base is a polymer panel article and the polarizing film is disposed on a surface of the base or inside of the base.
<12> The front window of means of traveling according to any one of <6> to <11>, wherein the means of traveling is a car.

The polarizing film for a window of the present invention contains at least an anisotropic absorber, and reduces a horizontally polarized light (s-polarized light) contained in an incident light from outside to 90% or less. In accordance with the polarizing film for a window of the present invention, the horizontally polarized light (s-polarized light) contained in the incident light is effectively reduced, and the incident light coming from the window is suppressed from reflecting on the floor inside. Moreover, in the case where the polarizing film for a window is used as a polarizing film for a front window of a car, it excels in light fastness, and effectively prevents the background reflections of structures inside of the car.
The front window of means of traveling of the present invention contains at least a base, a polarizing film and an antireflection film, wherein the polarizing film is the polarizing film for a window of the present invention.
In accordance with the front window of means of traveling of the present invention, the reduction effect of s-polarized light contained in the outdoor daylight (e.g. sun light) at unexpectable degrees by combining the antireflection film and the horizontally polarizing film. In the case where the sufficient effect cannot be attained only by the antireflection film and a material of the dashboard causes internal scattering only by the horizontally polarizing film, though the direct sunlight is changed to the vertically polarized light (p-polarized light), the polarization is largely extinguished as a result of the internal scattering caused by the surface of the dashboard, and therefore the horizontally polarized light (s-polarized light) emitted as a result thereof is reflected on the inner surface of the wind shield and causes the background reflections. Accordingly, the reduction level, at which decorations of the dashboard with various colors and patterns are not obstacle to safe driving, can be achieved by the front window of means of traveling of the present invention which combines the antireflection film and horizontally polarizing film.

Brief Description of Drawings

FIG.1A is a plane view showing an orientation state of the anisotropic absorber on a horizontal plane of the polarizing film for a window.

FIG.1B is a cross-sectional view showing a section indicated with the line A-A in FIG.1A.

FIG.1C is a cross-sectional view showing a section indicated with the line B-B in FIG. 1A.

FIG.1B is another cross-sectional view showing a section indicated with the line B-B in FIG.1A.

FIG. 2 is a graph showing an absorption spectrum of the anisotropic metal nanoparticle.

FIG. 3 is a diagram illustrating a mechanism for preventing background reflections in the case where the front window of means of traveling of the present invention is used for an automobile.

FIG. 4 is a diagram showing an embodiment that the polarizing film is disposed as an intermediate layer disposed in a laminated glass.

FIG. 5 is a diagram showing an embodiment that the polarizing film is disposed on one side of a laminated glass.

FIG. 6 is a graph showing the shift of the reflectance, when the light is incident on a medium having refractive index of 1.46 via a medium having a refractive index of 1.

FIG. 7 is a diagram explaining a method for evaluating the background reflections in Examples.

Best Mode for Carrying Out the Invention

(Polarizing film for a window)

The polarizing film for a window of the present invention contains at least an anisotropic absorber, and optionally contains other substances, if necessary.

The polarizing film for a window is configured to reduce horizontally polarized light (s-polarized light) included in an incident light to be 90% or less, and is preferably configured to reduce thereof to be 80% or less. Namely, a reduction ratio of S-polarized light is 90% or less, and preferably 80% or less. By effectively reducing s-polarized light, a reflection of the incident light from an interior floor can be reduced.

The reduction ratio of s-polarized light (k%) is measured, for example, by the following manner. At first, the polarizing film for a window is inserted in between a polarizer and a photodetector, and then the light emitted from a white light source is passed through the polarizer, e.g. polar core or the like, so as to be completely polarized. The quantity of the completely polarized light after being passed through the sample is measured by the photodetector. At this time, the changes in the light quantity is observed while rotating the plane direction of the sample, and the maximum quantity of the transmitted light is represented as $I_0$ and the minimum quantity of the transmitted light is represented as h. The reduction ratio of s-polarized light (k%) can be determined by the following formula:

$$k(\%)= 100(I_1/I_0)$$

Use of the polarizing film for a window is suitably selected depending on the intended purpose without any restrictions. For example, it can be suitably used as various windows, such as openings or partitioning, for buildings such as conventional housings, complex housings, office buildings, commercial buildings, public facilities, factories and the like, windows for various means of traveling such as a car, a bus, a truck, a train, a bullet train, an aircraft, a passenger aircraft, a ship, and the like.

-Anisotropic absorber-

The anisotropic absorber has an average aspect ratio of 1.5 or more, preferably 1.6 or more, more preferably 2.0 or more. When it is less 1.5, the anisotropic absorber does not exhibit a sufficient effect of anisotropic absorbance.

The aspect ratio of the anisotropic absorber is determined by measuring the major axis and minor axis of the anisotropic absorber, and calculating based upon the following formula:

(a length of the major axis of the anisotropic absorber)/ (a length of the minor axis of the anisotropic absorber)

The length of the minor axis of the anisotropic absorber is suitably adjusted depending on the intended purpose without any restrictions, but it is preferably in the range of 1 nm to 50 nm, and more preferably in the range of 5 nm to

30 nm. The length of the major axis of the anisotropic absorber is suitably adjusted depending on the intended purpose without any restrictions, but it is preferably in the range of 10 nm to 1,000 nm, and more preferably in the range of 10 nm to 100 nm.

In the present invention, the anisotropic absorber is orientated so that the major axis thereof is substantially horizontal to a horizontal plane of the polarizing film for a window (a plane of a base in the case where the film is formed on the base). By orientating the major axis of the anisotropic absorber to be substantially horizontal to the horizontal plane of the film, the view-angle dependency can be reduced.

The term "substantially horizontal" means that the major axis of the anisotropic absorber is orientated at less than ±30 degrees to the horizontal plane of the film, preferably orientated at ±10 degrees or less, more preferably at ±5 degrees or less, further preferably 0 degree (parallel). In the case where the angle between the major axis of the anisotropic absorber and the horizontal plane of the film is 30 degrees or more, characteristics of dichroism is suppressed and it has no difference with a normal tinted glass.

Note that, in the present specification and the attached claims, an angle "±A" denotes a range of -A degrees to+A degrees.

Hereinafter, the orientated state of the anisotropic absorber will be specifically described with reference to the drawings. FIG.1A is a plane view showing the orientated state of the anisotropic absorber P in the polarizing film for window A. FIG. 1B is a cross-sectional view at the section shown with the line A-A in FIG.1A. FIG.1C is a cross-sectional view at the section shown with the line B-B in FIG.1A. FIG. 1D is another cross-sectional view at the section shown with the line B-B in FIG. 1A.

As shown in FIGs. 1A-1C, the major axis of the anisotropic absorber P is horizontally (0 degree) orientated to the plane of the base (horizontal plane).

As shown with "a" in FIG.1D, the major axis of the anisotropic absorber P is horizontally (0 degree) orientated to the plane of the base (horizontal plane). As shown with "b" in FIG.1D, the major axis of the anisotropic absorber P is substantially horizontally (approximately +20 degrees) orientated to the plane of the base (horizontal plane). As shown with "c" in FIG. 1D, the major axis of the anisotropic absorber P is substantially horizontally (-20 degrees) orientated to the plane of the base (horizontal plane).

The polarizing film for a window is formed on a front face of the base in FIGs. 1A-1D, but it can also be formed on the back face of the base.

Moreover, the anisotropic absorber is preferably aligned at one direction on a plane of the polarizing film for a window. For example, it is aligned so that the arrangement of the plurality of the anisotropic absorbers in the direction of the major axis thereof and a horizontal line of the plane of the polarizing film for a window are substantially parallel. In this case, an angle made between the arrangement of a plurality of anisotropic absorbers in the direction of the major axis and the horizontal line of the plane of the polarizing film for a window is preferably ±30 degrees or less, more preferably ±5 degrees or less, further preferably 0 degree (horizontal). In FIG.1A, the arrangement of a plurality of the anisotropic absorbers in the direction of the major axis is aligned to be parallel to the horizontal line of the plane of the polarizing film for a window.

The orientation state where the major axis of the anisotropic absorber is horizontal to the horizontal plane of the polarizing film for a window can be confirmed by observing the cross-section of the polarizing film for a window under a transmission electron microscope (TEM).

The anisotropic absorber is suitably selected depending on the intended purpose without any restrictions. Examples thereof include a dichroic dye, anisotropic metal nanoparticle, carbon nanotube and metal complex. Among these, the dichroic dye, the anisotropic metal nanoparticle and the carbon nanotube are particularly preferable.

Note that, an iodine/PVA polarizing plate, which is currently commonly used for use in a display, can also be used as the polarizing film for a window of the present invention. When used as a window, however, it is exposed with direct sun light or the high intensity light via one plate of glass having a thickness of a few millimeters for a long period of time, and thus the conventional iodine/PVA polarizing plate will be faded or discolored within a few months. Therefore, use of the conventional iodine/PVA polarizing plate is limited. Moreover, in the case where the plate is used as a windshield of a car, there is a restriction that the transmittance thereof has to be 70% or more so as to comply with the law. However, the conventional iodine/PVA polarizing plate has a transmittance of 50% or less, and thus it cannot be used for use as a windshield of a car. In order to apply the iodine/PVA polarizing plate for the use in a car, an anisotropic metal nanoparticle or carbon nanotube of high resistance is preferably used as the anisotropic absorber. However, the content thereof should be controlled so that the transmittance does not fall under 70% or less.

- Anisotropic metal nanoparticle -

An anisotropic metal nanoparticle is a rod-like metal fine particle of nano-order, i.e. several nanometers to 100 nm. The rod-like metal fine particle means a particle having an aspect ratio (major axis length / minor axis length) of 1.5 or more.

Such an anisotropic metal nanoparticle exhibits surface plasmon resonance and has absorption peak(s) in the ultraviolet to infrared wavelength region. For example, an anisotropic metal nanoparticle having a minor axis length of 1 nm to 50 nm, a major axis length of 10 nm to 1,000 nm and an aspect ratio of 1.5 or more allows for changing the absorption peaks thereof between the minor axis direction and the major axis direction, and thus the polarizing film for a window in which such anisotropic metal nanoparticles are oriented in a substantially horizontal direction to the horizontal surface of the film functions as an anisotropic absorbing film.

FIG. 2 shows an absorption spectrum of an anisotropic metal nanoparticle having a minor axis length of 12.4 nm and a major axis length of 45.5 nm. The absorption peak of the minor axis of such an anisotropic metal nanoparticle resides near a wavelength of 530 nm and it appears red. The absorption peak of the major axis of the anisotropic metal nanoparticle resides near a wavelength of 780 nm and it appears blue.

Examples of metals for the anisotropic metal nanoparticles include gold, silver, copper, platinum, palladium, rhodium, osmium, ruthenium, iridium, iron, tin, zinc, cobalt, nickel, chrome, titanium, tantalum, tungsten, indium, aluminum and alloys thereof. Among these, gold, silver, copper and aluminum are preferable, and gold and silver are particularly preferable.

Hereinafter, as a preferred example of the anisotropic metal nanoparticle, a gold nanorod will be explained.

--Gold nanorod--

A production method of a gold nanorod is suitably selected depending on the intended purpose without any restrictions. Examples thereof include (1) an electrolytic method, (2) a chemical reduction method, (3) a photoreduction method, and the like.

In accordance with the (1) electrolytic method [Y.-Y. Yu, S.-S. Chang, C.-L. Lee, C. R. C. Wang, J. Phys. Chem. B, 101,6661 (1997)], an aqueous solution containing a cationic surfactant is electrolyzed by passing a constant electric current through it, and a gold cluster is eluted from an anodic metal plate to generate a gold nanorod. As the surfactant, a tetra ammonium salt having a structure in which four hydrophobic substituents are bound to a nitrogen atom is used, and a compound that does not form autonomous molecular aggregate such as tetradodecyl ammonium bromide (TDAB) is further added thereto. When a gold nanorod is produced, the supply source of gold is a gold cluster eluted from an anodic gold plate, and no gold salt such as chlorauric acid is used. During electrolyzation, an anodic gold plate is irradiated with an ultrasonic wave, and a silver plate is immersed in the solution to accelerate the growth of the gold nanorod.

In the electrolytic method, the length of a gold nanorod to be produced can be controlled by changing the area of a silver plate to be immersed, separately from electrodes to be used. By controlling the length of a gold nanorod, the position of an absorption band of near-infrared light region can be set in between around 700 nm to around 1,200 nm. When reaction conditions are kept constant, a gold nanorod formed in a certain shape can be produced. However, because a surfactant solution to be used in electrolyzation is a complicated system containing an excess amount of tetra ammonium salt, cyclohexane and acetone and there is an indefinite element such as irradiation of an ultrasonic wave, it is difficult to theoretically analyze a cause-effect relationship between the shape of gold nanorod to be produced and various preparation conditions and to optimize the preparation conditions of gold nanorod. Further, in terms of electrolyzation characteristics, it is not easy to intrinsically scale up, and thus electrolytic method is not suited for preparation of a large amount of gold nanorod.

In accordance with the (2) chemical reduction method [N.R. Jana, L. Gearheart, C. J. Murphy, J. Phys. Chem. B, 105,4065 (2001)], a chlorauric acid is reduced using $NaBH_4$ so as to generate a gold nanoparticle. The gold nanoparticle is used as a "seed particle" and the "seed particle" is made grow up in a solution to thereby obtain a gold nanorod. The length of the gold nanorod to be produced is determined depending on the quantitative ratio between the "seed particle" and the chlorauric acid to be added to a grown-up solution. The chemical reduction method allows for preparing a gold nanorod having a longer length than that produced by the (1) electrolytic method, and there has been reported a gold nanorod having a length longer than 1,200 nm and an absorption peak in near-infrared light region.

However, the chemical reduction method needs to prepare a "seed particle" and two reaction tanks and to subject it to a growth reaction. Generation of a "seed particle" ends in several minutes, however, it is difficult to increase the concentration of the gold nanorod to be produced. The concentration of generated gold nanorod is one-tenth or less of the concentration of a gold nanorod generated by the (1) electrolytic method.

In accordance with the (3) photoreduction method [F. kim, J.H. Song, P. Yang, J. Am. Chem. Soc.,124,14316 (2002)], a chlorauric acid is added to the substantially same solution as used in the (1) electrolytic method, and the chlorauric acid is reduced by irradiation of ultraviolet ray. For the ultraviolet ray irradiation, a low-pressure mercury lamp is used. The photoreduction method allows for generating a gold nanorod without generating a seed particle, and for controlling the length of the gold nanorod by irradiation time of the ultraviolet ray, and has a characteristic in that the shape of the gold nanorod to be produced is uniformized. Further, the (1) electrolytic method needs fractionation of particles by centrifugal separation because a large amount of spherically shaped particles coexist after reaction, however, the photoreduction method needs no fractionation treatment because the method causes less amount of spherically

shaped particles. The photoreduction method is excellent in reproducibility and enables to substantially surely obtain gold nanorods in same size by constant operation.

-Carbon nanotube-

The carbon nanotube is an elongated tubular carbon having a diber diameter of 1 nm to 1,000 nm, a length of 0.1 μm to 1,000 μm in length, and an aspect ratio of 100 to 10,000.

As the production method of the carbon nanotube, there have been known an arc discharge method, laser evaporation method, heat CVD method, plasma CVD method, and the like. Carbon nanotubes obtained by an arc discharge method or laser evaporation method are classified into a single-layer carbon nanotube (SWNT: Single-Wall Nanotube) formed from only one-layer of graphene sheet and a multi-layered carbon nanotube (MWNT: Maluti-Wall Nanotube) formed from a plurality of graphene sheets.

Moreover, in the heat CVD method or the plasma CVD method, mainly a multi-wall nanotube can be produced. The single-wall nanotube has a structure in which one graphene sheet is wrapped around a material in which carbon atoms are bound to each other in a hexagonal shape by the strongest bond called an SP2 bond.

The carbon nanotube (SWNT, MWNT) is a tubular material of 0.4 nm to 10 nm in diameter and 0.1 μm to several hundred micro meters in length, having a structure that one graphene sheet or several graphene sheets are rolled in a cylindrical shape. It has a unique characteristic in that it becomes a metal or a semiconductor depending on in which direction the graphene sheet(s) are rolled. Such a carbon nanotube has characteristics that light absorption and emission easily occurs in the longitudinal direction thereof but rarely occurs in the radial direction thereof, and can be used as an anisotropic absorbing material and an anisotropic scattering material.

The content of the anisotropic absorber in the polarizing film is preferably 0.1% by mass to 90.0% by mass and more preferably 1.0% by mass to 30.0% by mass. When the content is less than 0.1 % by mass, sufficient polarization performance cannot be obtained. On the other hand, when the content thereof in the polarizing film is more than 90.0% by mass, a film formation of the polarizing film cannot be performed easily, and the transmittance of the polarizing film is excessively decreased.

The polarizing film for a window contains other substances such as a dispersant, a solvent, a binder resin, and the like in accordance with the formation method (orientation method) of the polarizing film for a window, other than the anisotropic absorber.

The formation method of the polarizing film for a window can be suitably selected depending on the intended purpose without any restrictions, provided that the major axis of the anisotropic absorber is orientated substantially horizontal to the horizontal plane of the film. Examples of the formation method thereof include: (1) a drawing method, (2) a guest-host liquid crystal method, (3) a high shear coating method, (4) a Langmuir-Blodgett (LB) method, (5) a molding method, (6) a vapor deposition-drawing method, (7) a micro phase separation method, and the like. Among these methods, (1) the guest-host liquid crystal method and (2) the drawing method are particularly preferred. (1) The drawing method and (2) the guest-host liquid crystal method will be precisely explained in the later descriptions of the formation method of the polarizing film for a window.

(3) High shear coating method

A coating solution wherein the anisotropic absorber, and optionally the binder resin, solvent, surfactant or the like are dispersed is coated in accordance with a method which applies high shear at the time of coating by means of a slit coater, die coater or the like. In this manner, the polarizing film for a window in which the anisotropic absorber is substantially horizontally orientated with respect to a horizontal plane of the film can be obtained.

(4) Langmuir-Blodgett (LB) method

The solution in which the anisotropic absorber is dispersed is spread onto the water surface, and the anisotropic absorber is floated on the water surface. Thereafter, the area of the water surface is decreased to thereby obtain the polarizing film for a window in which the anisotropic absorber is substantially horizontally orientated with respect to the horizontal plane of the film.

(5) Molding method

The anisotropic absorber is coated on a surface of a base having convex-concaves or grooves of nano-order, to thereby obtain the polarizing film for a window in which the anisotropic absorber is substantially horizontally orientated with respect to the horizontal plane of the film.

(6) Vapor deposition-drawing method

After depositing a metal thin film on a surface of a base by anisotropic Ar sputtering, the temperature of the base is elevated to the glass transition temperature thereof, and it is subjected to the drawing treatment to thereby obtain the polarizing film for a window in which the anisotropic metal nanoparticle is substantially horizontally orientated with respect to the face of the base (horizontal plane).

<Forming method of the polarizing film for a window>

-First embodiment of the forming method of the polarizing film for a window-

In the first embodiment of the forming method of the polarizing film for a window, a film containing at least an anisotropic absorber is formed, and the formed film is drawn by monoaxial drawing, to thereby form the polarizing film for a window in which the major axis of the anisotropic absorber is substantially horizontally orientated with respect to the horizontal plane of the film.

The first embodiment of the forming method of the polarizing film for a window is identical to the aforementioned (1) drawing method.

In accordance with the drawing method, a coating solution formed by dispersing the anisotropic absorber in a polymer solution is coated on a base, the coated layer is dried so as to form a coated layer, the coated layer is heated at the temperature similar to the glass transition temperature of the polymer contained in the coated film, and then monoaxial drawing is performed thereon. Other than the method just mentioned, there are methods such as (1) a method in which a coating solution containing the anisotropic absorber and an ultraviolet (UV) curing monomer or heat curing monomer is coated and dried on a base, the cured film obtained by UV radiation or heating is heated at a temperature similar to the glass transition temperature of the cured film, and then monoaxial drawing is performed thereon, (2) a method in which a film of the anisotropic absorber is transferred onto a surface of a polymer film, it is heated at a temperature similar to the glass transition temperature of the polymer, and the monoaxial drawing is performed thereon, and the like.

In terms of the shape, structure, size and the like, the base is suitable selected depending on the intended purpose without any restrictions. For example, the shape of the base may be selected from a plate, a sheet and the like, and the structure thereof may be a single-layered structure or multi-layered structure. These configurations can be arbitrarily selected.

The material of the base is, for example, polyolefin, such as triacetyl cellulose (TAC), polyethylene, polypropylene, poly(4-methylpentene-1) and the like, polyimide, polyimide amide, polyether imide, polyamide, polyetheretherketone, polyether ketone, polyketone sulfide, polyether sulfone, polysulfone, polyphenylene sulfide, polyphenylene oxide, polyethylene terephthalate, polyacetal, polycarbonate, polyacrylate, acrylic resin, phenol resin, or the like. The material of the base may also be a metal panel formed of aluminum, copper, iron or the like, a ceramic panel, a glass panel, or the like.

A resin used for the aforementioned polymer is suitably selected, depending on the intended purpose, from various resins having a transparency to the light having a wavelength within the region of visible ray and infrared ray, without any restrictions. Examples thereof include acrylic resin, polyester resin, alkyd resin, urethane resin, silicone resin, fluororesin, epoxy resin, polycarbonate resin, polyvinyl chloride resin, polyvinyl alcohol resin, and the like.

The solvent is suitable selected depending on the intended purpose without any restrictions, provided that polymer is dissolved or stably dispersed therein. Examples of the solvent include: water; alcohols such as methanol, ethanol, propanol, hexanol, ethylene glycol, and the like; aromatic hydrocarbons such as xylene, toluene, and the like; alicyclic hydrocarbons such as cyclohexane, and the like; ketones such as acetone, methylethyl ketone, and the like; esters such as ethyl acetate, butyl acetate, and the like; ethers such as ethyleneglycol monobutylether; a mixture thereof; and the like.

Examples of the coating method include a dip coating method, air knife coating method, curtain coating method, roller coating method, wire-bar coating method, gravure coating method, microgravure coating method, extrusion coating method and the like.

The drawing is preferably performed while elevating the temperature up to around the glass transition temperature of the polymer contained in the coated film. Since the drawing may cause the defects such as fine convex or concave strip marks on the resin surface, a surface-smoothing treatment is preferably performed after the drawing. As means of heating for the compression, a pressure roller is generally used, and in this case, it is preferred that a releasing paper or a sheet having releasing properties is placed on the coating surface so as to prevent the resin from adhering to the pressure roller.

The preferably example of the configurations of the drawing machine used for the drawing is the one having an endless guide rail disposed symmetric to the center of a traveling path of a film to be drawn, a group of film clips

movably supported by the endless guide rail, a heating zone configured to help the film to be drawn easily, and a cooling zone configured to stabilize the form of the film after being drawn. As a tenter clip, for example, the one disclosed in JP-A Nos. 06-344437 and 2001-187421 is suitably used.

-Second embodiment of the manufacturing method of the polarizing film for a window-

In the second embodiment of the forming method of the polarizing film for a window, a coating solution for the polarizing film for a window containing at least an ultraviolet curable liquid crystal compound and an anisotropic absorber is coated on a base having an orientation film on the surface thereof, the coating solution is dried so as to form a coated layer, the coated layer is exposed with an ultraviolet ray while heating at the temperature at which a liquid crystal phase is expressed, to thereby form the polarizing film for a window in which the long axis of the anisotropic absorber is orientated substantially horizontal to the plane of the base.
The second embodiment of the forming method of the polarizing film for a window is identical to the guest-host liquid crystal method.
In terms of the shape, structure, size and the like, the base is suitably selected depending on the intended purpose without any restrictions. For example, the shape of the base may be selected from a plate, a sheet and the like, and the structure thereof may be a single-layered structure or multi-layered structure. These configurations can be arbitrarily selected.
The material of the base is not particularly limited, and both an inorganic material and an organic material are suitable for use as the material of the base.
Examples of the inorganic material include glass, quartz, silicon, and the like.
Examples of the organic material include acetate resin such as triacetyl cellulose (TAC), polyester resin, polyether sulfone resin, polysulfone resin, polycarbonate resin, polyamide resin, polyimide resin, polyolefin resin, acrylic resin, polynorbornene resin, cellulose resin, polyarylate resin, polystyrene resin, polyvinyl alcohol resin, polyvinyl chloride resin, polyvinylidene chloride resin, polyacryl resin, and the like. These may be used singly or in combination of two or more, as the material of the base.
The base may be arbitrarily synthesized, or selected from the commercially available products.
The thickness of the base can be suitably adjusted depending on the intended purpose without any restriction. The thickness thereof is preferably from 10 $\mu$m to 500 $\mu$m, and more preferably 50 $\mu$m to 300 $\mu$m.

- Orientation film -

The orientation film is formed by depositing a film of polyimide, polyamideimide, polyetherimide, polyvinyl alcohol or the like on the surface of the base.
The orientation film may be a film subjected to a photo-orientation treatment. In the photo-orientation, an anisotropy is generated on a surface of a photo-orientation film by irradiating photoactive molecules such as an azobenzene polymer, polyvinyl cinnamate or the like with a linearly polarized light or unpolarized light at a wavelength for causing a photochemical reaction, by effect of incident light an orientation of molecular major axis is generated in the outermost surface of the film, and a driving force is formed therein so as to orient a liquid crystal contacting with molecules in the outermost surface.
Examples of materials of the photo-orientation film include the above-mentioned materials, and further include materials capable of generating an anisotropy on a film surface by any one of reactions of photoisomerization, photodimerization, photocyclization, photocrosslinking, photodegradation, and photodegradation-bonding by irradiation of a linearly polarized light at a wavelength for causing a photochemical reaction of photoactive molecules. For example, it is possible to use various photo-orientation film materials described in "Journal of the Liquid Crystal Society of Japan, Vol. 3 No.1, p. 3 (1999), by Masaki Hasegawa", "Journal of the Liquid Crystal Society of Japan, Vol. 3 No. 4, p. 262 (1999)" by Yasumasa Takeuchi" and the like.
When a liquid crystal is applied over the surface of an orientation film described above, the liquid crystal is oriented by using at least any of fine grooves on the orientation film surface and orientation of molecules in the outermost surface as a driving force.
The ultraviolet curable liquid crystal compound is suitably selected depending on the intended purpose without any restrictions, provided that it has a polymerizable group and can be hardened by irradiation of ultraviolet ray. Although the examples shall not be limited thereto, the suitable examples thereof are the compounds represented by any one of the following structural formulas:

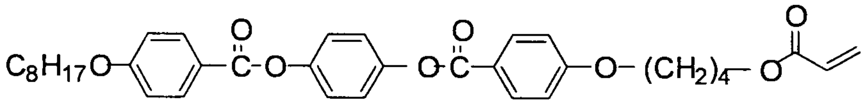

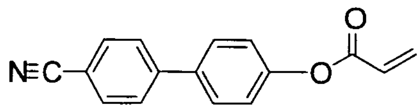

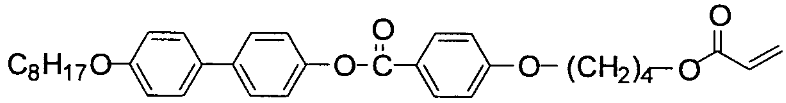

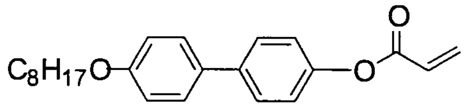

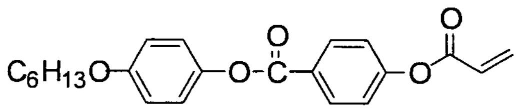

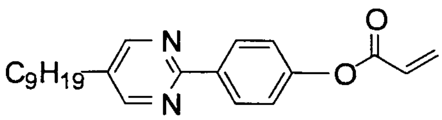

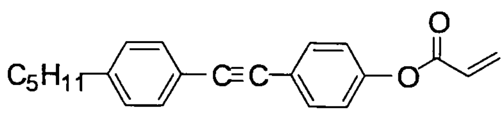

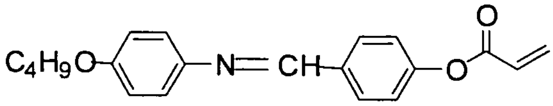

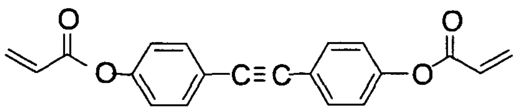

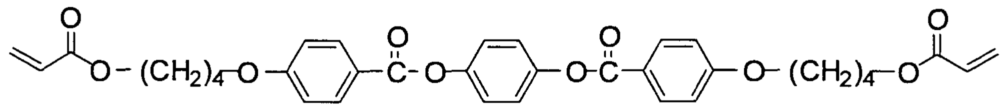

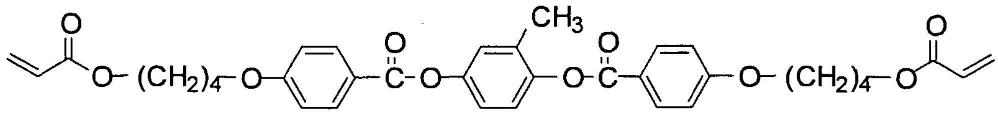

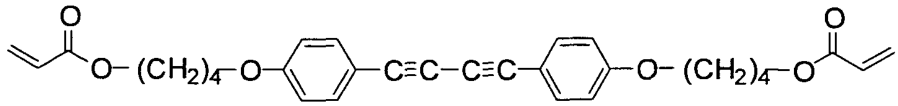

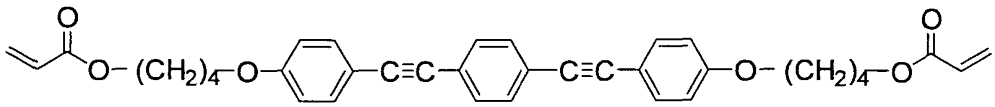

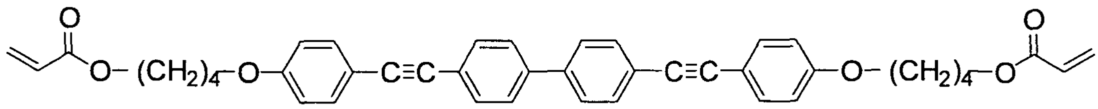

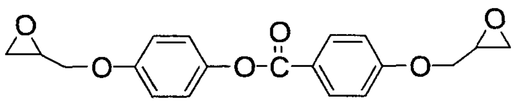

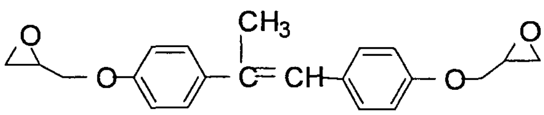

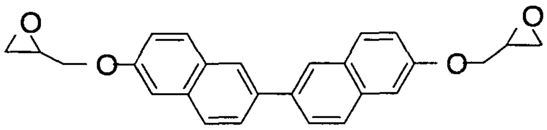

As the liquid crystal compound, commercially available products can be used. Examples of the commercially available products include PALIOCOLOR LC242 manufactured by BASF; E7 manufactured by Merck Ltd.; LC-SILICON-CC3767 manufactured by Wacker-Chemie; and L35, L42, L55, L59, L63, L79 and L83 manufactured by Takasago International Corporation.

The content of the liquid crystal compound is preferably 5% by mass to 90% by mass and more preferably 10% by mass to 80% by mass relative to the total solid content of a coating solution of the polarizing film for a window.

The coating solution of the polarizing film for a window preferably contains a photopolymerization initiator. The photopolymerization initiator is not particularly limited and may be suitably selected from conventional photopolymerization initiators in accordance with the intended use. Examples thereof include p-methoxyphenyl-2,4-bis (trichloromethyl)-s-triazine, 2-(p-butoxystyryl)-5-trichloromethyl 1,3,4-oxadiazole, 9-phenylacrydine, 9,10-dimethylbenzphenazine, benzophenone/Michler's ketone, hexaarylbiimidazole/mercaptobenzimidazole, benzyldimethyl ketal, and thioxanthone/amine. These photopolymerization initiators may be used alone or in combination.

As the photopolymerization initiator, commercially available products can be used. Examples thereof include IRGACURE 907, IRGACURE 369, IRGACURE 784 and IRGACURE 814 manufactured by Chiba Specialty Chemicals K.K.; and LUCIRIN TPO manufactured by BASF.

The amount of the photopolymerization initiator is preferably 0.1% by mass to 20% by mass and more preferably 0.5% by mass to 5% by mass relative to the total solid content mass of the coating solution of polarizing film for a window.

The coating solution of the polarizing film for a window can be prepared, for example, by dissolving and/ or dispersing the ultraviolet curable crystal liquid compound, the anisotropic absorber, and arbitrarily selected other components depending on the intended purpose, in a suitable solvent. The solvent is suitably selected depending on the intended purpose without any restrictions. Examples thereof include: halogenated hydrocarbons such as chloroform, dichloromethane, carbon tetrachloride, dichloroethane, tetrachloroethane, methylene chloride, trichloroethylene, tetrachloroethylene, chlorobenzene, and orthodichlorobenzene; phenols such as phenol, p-chlorophenol, o-chlorophenol, m-cresol, o-cresol, and p-cresol; aromatic hydrocarbons such as benzene, toluene, xylene, methoxybenzene, and 1,2-dimethoxybenzene; ketone solvents such as acetone, methyl ethyl ketone (MEK), methyl isobutyl ketone, cyclohexanone, cyclopentanone, 2-pyrrolidone, and N-methyl-2-pyrrolidone; ester solvents such as ethyl acetate and butyl acetate; alcohol solvents such as t-butyl alcohol, glycerine, ethylene glycol, triethylene glycol, ethylene glycol monomethylether, diethylene glycol dimethylether, propylene glycol, dipropylene glycol, and 2-methyl-2,4-pentandiol; amide solvents such as dimethyl formamide and dimethylacetoamide; nitrile solvents such as acetonitrile and butylonitrile; ether solvents such as diethyl ether, dibutyl ether, tetrahydrofuran, and dioxane; and carbon disulfide, ethyl cellosolve and butyl cellosolve. These solvents may be used alone or in combination.

In order to fix the orientated state of the anisotropic absorber after coating the coating solution of the polarizing film for a window to a base on which an orientation film is disposed and drying so as to form a coated layer, ultraviolet ray is irradiated while hearing the coating layer at an temperature at which a liquid crystal phase is expressed. In this manner, the polarizing film for a window in which the major axis of the anisotropic absorber is substantially horizontally orientated to the horizontal plane of the polarizing film can be formed.

Examples of the coating methods include a spin-coating method, casting method, roller coating method, flow coating method, printing method, dip coating method, flow casting method, bar coating method and gravure coating method.

The curing may be thermal curing or photocuring, and photocuring is particularly preferable.

The conditions of the ultraviolet irradiation are suitably adjusted depending on the intended purpose without any restrictions. For example, the wavelength of an ultraviolet light applied is preferably 160 nm to 380 nm, and more preferably 250nm to 380nm, and the irradiation time is 0.1 seconds to 600 minutes, and more preferably 0.3 seconds to 30 seconds. The conditions for the heating are suitably adjusted depending on the intended purpose without any restrictions. For example, the heating temperature is preferably 60°C to 120°C.

Examples of a light source of the ultraviolet light include a low-pressure mercury lamp (e.g., a bactericidal lamp, fluorescent chemical lamp and black light), high-pressure discharge lamp (e.g., a high-pressure mercury lamp and metal halide lamp) and short-arc discharge lamp (e.g., an ultrahigh-pressure mercury lamp, xenon lamp and mercury xenon lamp).

(Front window for means of traveling)

The front window for means of traveling of the present invention contains a base, a polarizing film and an antireflection film, and optionally contains other layers, if necessary.

The polarizing film for a window of the present invention can be used as the aforementioned polarizing film.

The polarizing film is preferably disposed on the plane of the base which faces the inner side of the means of traveling (on the side where outside light does not come in).

The front window for means of traveling preferably has an angle of 20 degrees to 50 degrees in between the plane of the base and the horizontal standard plane, and the anisotropic absorbance contained in the polarizing film is preferably orientated so that the direction of the average absorbance axis of the anisotropic absorber has an angle of less than ±30 degrees to a line where the face of the base and the horizontal standard plane are crossed from the viewpoint of the driver of means of traveling.

As shown in FIG. 3, the front window of means of traveling is preferably disposed on the side of the glass constituting the base on which light is not incident (back surface). In the case where the front window of means of traveling is a laminated glass which contains two glass plates and an intermediate layer disposed in between the glass plates, it is preferably that the polarizing film for a window is disposed as the intermediate layer 6 as shown in FIG. 4, or the polarizing film for a window is disposed on the side of the laminated glass on which light is not incident (back surface) as shown in FIG. 5.

As shown in FIG. 3, the angle made between the front window of means of traveling and a surface of a dashboard (horizontal standard plane) is preferably 20 degrees to 50 degrees, and more preferably 25 degrees to 40 degrees.

The means of traveling is suitably selected depending on the intended purpose without any restrictions, provided that the wind shield of the means of traveling and the horizontal standard plane make an angle of 20 degrees to 50 degrees. Examples thereof include a car, a bus, a truck, a train, a bullet train, an aircraft, a passenger aircraft and a ship, and the like. Among these, the car is particularly preferable.

Hereinafter, the mechanism for preventing background reflections by using the front window for means of traveling of the present invention will be explained with reference to FIG. 3. As mentioned above, the wind shield 1 is generally disposed so as to have an angle of approximately 30 degrees to the horizontal standard plane. In this case, the shadow of the dashboard 5 present in the car, which is visible to the driver at the time of driving, is a light which reflects on the inner surface of the wind shield at an incident angle of approximately 60 degrees.

Presume that the transmittance of the polarizing film for a window in which the anisotropic absorbance P is substantially horizontally orientated with respect to the horizontal plane of the glass is 75%, the sun light $I_0$ is considered as the two separate components, the horizontally polarized component Teo and polarized component $Tm_0$ which is vertical to Teo. Teo and $Tm_0$ passed through the wind shield 1 become respectively $Te_1$ and $Tm_1$ by passing through the anisotropic absorbance P, and Teo declines its strength in half as a result of passing through the anisotropic absorbance P to be $Te_1$ and $Tm_0$ is passed through the anisotropic absorbance P substantially as it is to be $Tm_1$. The light $I_2$ which is scattered by the dashboard 5 is expressed with Teo and $Tm_0$ as follow:

$$I_2 = Te_2 + iTm_2$$

$$= aTe_1 + aiTm_1 \text{ (note that, a denotes a reflectance of the dash board)}$$

$$\approx (a/2)Te + aiTm_0$$

The vertical component $aiTm_0$ of the light $I_2$ is incident on the wind shield at an incident angle of approximately Brewster's angle, and thus the vertical component $aiTm_0$ follows the routes $I_3$ and $I_7$ and then is emitted to the outside.

Note that, the aforementioned Brewster's angle is an incident angle at which the light reflected on a boundary of two materials having mutually different refractive indexes is completely polarized.

When the light is incident on the boundary of two materials having different refractive indexes at an angle, a polarized component which is parallel to the incident angle (p-polarized light) and a polarized component which is vertical to the incident angle (s-polarized light) have mutually different reflectance. As shown in FIG. 6, p-polarized light is reduced down to 0 at Brewster's angle, and then p-polarized light is increased with the increase of the angle after Brewster's angle. S-polarized light is simply increased with the increases of the angle. The Brewster's angle of the visible light which is incident from the air having a refractive index of 1 to the glass having a refractive index of 1.46 is approximately 56 degrees.

The horizontal component (a/2)Te of the light $I_2$ is reflected at approximately 3% on the antireflection film which is an outermost layer of the wind shield on the back side, and the reflected light is visible to the driver as the light $I_6$. Moreover, the remained 97% of the (a/2)Te travels inside of the wind shield, and a half thereof is emitted to the outside and another half thereof is reflected to inside to be $I_4$, and a half of $I_4$ is absorbed by the anisotropic absorber P, then the remain thereof becomes visible to the driver as the light $I_5$.

$$I_6 = 3/100 \cdot (a/2)\ Te$$

$$= (3a/200)\ Te$$

$$I_5 = 1/2 \cdot 1/2 \cdot 0.97 \cdot (a/2)Te$$
$$= (0.97/8) \cdot aTe$$

Accordingly, the shadow of the dashboard visible to the driver is expressed with the light intensity $I_h$ as represented by the following formula:

$$I_h = I_5 + I_6$$
$$= 0.97/8 \cdot aTe + (3a/200)Te$$

Moreover, when a reflective index a of the dashboard is approximately 10%, $I_h$ is represented by the following formula:

$$I_h = (0.0121+0.0015)\ Te$$
$$= 0.0136Te$$

As a result, the light intensity Ih of the shadow of the dashboard is calculated as 1.36%, which is reduced at approximately one digit or more, compared with the case of raw glass.

<Base>

As the base, glass (namely a glass base) is the most suitable. This is because glass has the best actual performance in that it has 12-year durability, which is the roughly-estimated operating life of means of traveling under environments where they are exposed to wind and rain and do not disturb the polarization. However, recently, plastics, which have high-durability and high-isotropy and rarely disturb polarization, for example norbornene polymers, are provided even in polymer plate products. Materials other than glass can be also used for the base.

-Glass base-

The glass base is suitably selected depending on the intended purpose without any restrictions. Examples thereof include a single-layered glass, laminated glass, reinforced laminated glass, multi-layered glass, reinforced multi-layered glass, laminated multi-layered glass, and the like.

Examples of a plate glass constituting such the glass base include a transparent plate glass, template glass, wire-included plate glass, line-included plate glass, reinforced plate glass, heat reflecting glass, heat absorbing glass, Low-E plate glass, and other various plate glasses.

The glass base may be a transparent colorless glass or a transparent colored glass as long as it is a transparent glass.

The thickness of the base glass is suitably adjusted depending on the intended purpose without any restrictions. It is preferably 2 mm to 20 mm and more preferably 4 mm to 10 mm.

-Laminated glass-

The laminated glass is formed in a unit structure in which an intermediate layer is disposed in between two sheets of plate glass. Such a laminated glass is widely used as a windshield of means of traveling such as a car and a windowpane for a building and the like, since it is safe and does not generate any broken pieces of glass to fly apart at the time when an external impact is applied thereto. In a case of the laminated glass for a car, a fairly thin laminated glass has been used for the purpose of weight saving, and one sheet of glass has a thickness of 1 mm to 3 mm, and two sheets of them are laminated via an adhesive layer having a thickness of 0.3 mm to 1 mm, thereby forming a laminated glass having a total thickness of approximately 3 mm to 6 mm.

The aforementioned two sheets of plate glass may be suitably selected from the aforementioned varieties of

the plate glass depending on the intended use.

Examples of thermoplastic resin to be used for the intermediate layer include polyvinyl acetal resin, polyvinyl alcohol resin, polyvinyl chloride resin, saturated polyester resin, polyurethane resin, ethylene-vinyl acetate copolymer, and the like. Among these, the polyvinyl acetal resin is preferable because it allows for obtaining an intermediate layer that is excellent in a balance of various properties such as transparency, weather resistance, strength and bonding force. Polyvinyl butyral is particularly preferable.

The polyvinyl acetal resin is suitably selected depending on the intended purpose without any restrictions. Examples thereof include polyvinyl formal resin that can be obtained by reacting polyvinyl alcohol (hereinafter occasionally abbreviated as PVA) with formaldehyde; narrowly defined polyvinyl acetal resin that can be obtained by reacting PVA with acetaldehyde; polyvinyl butyral resin (hereinafter occasionally abbreviated as PVB) that can be obtained by reacting PVA with n-butylaldehyde; and the like.

PVA used for synthesis of the polyvinyl acetal resin is suitably selected depending on the intended purpose without any restrictions. For example, PVA having an average polymerization degree of 200 to 5,000 is preferably used, and a PVA having an average polymerization degree of 500 to 3,000 is more preferably used. When the average polymerization degree thereof is less than 200, the strength of the intermediate layer formed using an obtained polyvinyl acetal resin may be excessively weak. When the average polymerization degree is more than 5,000, troubles may occur when a polyvinyl acetal resin is formed.

The polyvinyl acetal resin is suitably selected depending on the intended purpose without any restrictions. For example, the polyvinyl acetal resin preferably has an acetalization degree of 40 mol% to 85 mol%, and more preferably an acetalization degree of 50 mol % to 75 mol %. It may be difficult to synthesize polyvinyl acetal resin having an acetalization degree of less than 40 mol% or more than 85 mol% because of its reaction mechanism. The acetalization degree can be measured according to JIS K6728.

The intermediate layer contains the thermoplastic resin, and may further contain a plasticizer, a pigment, an adhesion adjustor, a coupling agent, a surfactant, an antioxidant, a thermal stabilizer, a light stabilizer, an ultraviolet absorbent, an infrared absorbent and the like, of necessary.

The method of forming the intermediate layer is suitably selected depending on the intended purpose without any restrictions. For example, a method is exemplified in which a composition containing a thermoplastic resin and other components is uniformly kneaded and then the kneaded product is formed into a sheet by a conventional method such as an extrusion method, calendering method, pressing method, casting method and inflation method.

The thickness of the intermediate layer is suitably adjusted depending on the intended purpose without any restrictions. It is preferably 0.3 mm to 1.6 mm.

In the present invention, it is preferable that the intermediate layer contains the polarizing film for a window of the present invention in view of the productivity, durability, and the like. In the case where the intermediate layer contains the polarizing film for a window of the present invention, the configurations of the intermediate layer is the same to the mentioned above, provided that it contains the anisotropic absorber and the anisotropic absorber is substantially horizontally orientated. Moreover, the polarizing film may be disposed on one side of the laminated glass.

The production method of the laminated glass is suitably selected depending on the intended purpose without any restrictions. For example, the intermediate layer is sandwiched with two sheets of transparent plate glass to form a laminated glass structure, the laminated glass structure is put in a vacuum bag such as a rubber bag, the vacuum bag is connected to an exhaust system, the laminated glass structure is preliminarily bonded at a temperature of 70°C to 110°C while reducing the pressure and vacuuming or degassing so that the pressure in the vacuum bag is set as a depressurization degree of about -65 kPa to -100 kPa, then the preliminarily bonded laminated glass structure is put in an autoclave, heated at a temperature of 120°C to 150°C and pressurized under a pressure of 0.98MPa to 1.47MPa to actually bond it, thereby obtaining a desired laminated glass.

<Antireflection film>

The antireflection film is preferably disposed on at least one side of an outermost surface of the base, and more preferably disposed on the polarizing film which is disposed on a side of the base where the light does not come in (inside of the means of traveling).

The antireflection film is suitably selected depending on the intended purpose without any restrictions, provided that it has sufficient durability and heat resistance in practical use and is capable of suppressing the reflectance to 5% or less at an incidence angle of 60 degrees. Examples thereof include (1) a film having fine convexoconcaves formed on the surface thereof, (2) a two-layered film structure using a combination of a film having a high refractive index and a film having a low refractive index, and (3) a three-layered film structure in which a film having a high refractive index, a film having a medium refractive index and a film having a low refractive index are sequentially formed in a laminate structure. Among these, the film (2) and the film (3) are particularly preferable.

Each of these antireflection films may be directly formed on a base surface by a sol-gel method, sputtering

method, deposition method, CVD method or the like. Moreover, each of these antireflection films may be formed by forming an antireflection film on a transparent support by a dip coating method, air-knife coating method, curtain coating method, roller coating method, wire bar coating method, gravure coating method, micro-gravure coating method or extrusion coating method and making the formed antireflection film adhered on or bonded to the base surface.

The antireflection film preferably has a layer structure in which at least one layer having a higher refractive index than that of a low-refractive index layer (a high-refractive index layer) and the low-refractive index layer (the outermost surface layer) are formed in this order on a transparent support. When two layers of refractive index layers each having a higher refractive index than that of the low-refractive index layer are formed, a layer structure is preferable in which a medium refractive index layer, a high-refractive index layer and a low-refractive index layer (the outermost surface layer) are formed in this order on a transparent support. An antireflection film having such a layer structure is designed so as to have refractive indexes satisfying the relation of "a refractive index of a high-refractive index layer > a refractive index of a medium refractive index layer > a refractive index of a transparent support > a refractive index of a low-refractive index layer". Note that the respective refractive indexes are relative indexes.

-Transparent support-

As the transparent support, a plastic film is preferably used. Examples of a material of the plastic film include cellulose acylate, polyamide, polycarbonate, polyester (for example, polyethylene terephthalate, polyethylene naphthalate, etc.), polystyrene, polyolefin, polysulfone, polyether sulfone, polyarylate, polyetherimide, polymethyl methacrylate, polyether ketone, and the like.

- High-refractive index layer and medium refractive index layer -

The layer having a high-refractive index in the antireflection layer is preferably composed of a curable film containing inorganic fine particles having a high-refractive index and an average particle diameter of 100 nm or less, and a matrix binder.

The inorganic fine particle having a high-refractive index is an inorganic compound having a refractive index of 1.65 or more, and preferably an inorganic compound having a refractive index of 1.9 or more. Examples thereof include oxides of Ti, Zn, Sb, Sn, Zr, Ce, Ta, La, In and Al; and composite oxides containing these metal atoms. Among these, an inorganic fine particle which contains mainly titanium dioxide and at least one element selected from Co, Zr and Al (hereinafter, may be referred to as "specific oxide") is preferable, and a particularly preferable element is Co.

The total amount of Co, Al and Zr to the amount of Ti is 0.05% by mass to 30 % by mass, preferably 0.1% by mass to 10% by mass, more preferably 0.2% by mass to 7% by mass, still more preferably 0.3% by mass to 5% by mass, and particularly preferably 0.5% by mass to 3% by mass.

Co, Al and Zr exist inside or on the surface of the inorganic fine particle mainly containing titanium dioxide. It is more preferable that Co, Al and Zr exist inside the inorganic fine particle mainly containing titanium dioxide, and it is still more preferable that Co, Al and Zr exist inside and on the surface of the inorganic fine particle mainly containing titanium dioxide. These specific metal elements may exist as oxides.

Further, another preferable inorganic fine particle is, for example, an inorganic fine particle which is a particle of a composite oxide composed of a titanium element and at least one metal element (hereinafter, occasionally abbreviated as "Met") selected from metal elements that will have a refractive index of 1.95 or more, and the composite oxide is doped with at least one metal ion selected from Co ion, Zr ion and Al ion (hereinafter, may be referred to as "specific composite oxide").

Here, examples of the metal elements of the metal oxide that will have a refractive index of 1.95 or more in the composite oxide include Ta, Zr, In, Nd, Sb, Sn and Bi. Of these, Ta, Zr, Sn and Bi are particularly preferable.

The amount of the metal ion doped into the composite oxide is preferably contained in a range not exceeding 25% by mass, more preferably 0.05% by mass to 10% by mass, still more preferably 0.1% by mass to 5% by mass, and particularly preferably 0.3% by mass to 3% by mass in the total amount of the metal [Ti and Met] constituting the composite oxide, from the viewpoint of maintaining refractive indexes.

The doped metal ion may exist as any of a metal ion and a metal atom and preferably exists in an appropriate amount from the surface of the composite oxide through the inside thereof. It is more preferable that the doped metal ion exist on the surface of and inside the composite oxide.

Examples of a production method of the fine particle as described above include a method of treating the particle surface with a surface treatment agent; a method of making a core shell structure in which a particle having a high-refractive index is used as the core, and a method of using a specific dispersing agent in combination.

Examples of the surface treatment agent used in the method of treating the particle surface therewith include the silane coupling agent described in JP-A Nos. 11-295503,11-153703 and 2000-9908; and the anionic compound or organic metal coupling agent described in JP-A No. 2001-310432.

As the method of making the core shell structure using a high-refractive index particle as the core, the techniques described in JP-A No. 2001-166104 and U.S. Patent Application Publication No. 2003/ 0202137 can be used.

Furthermore, examples of the method of using a specific dispersing agent in combination include techniques described in Japanese Patent Application JP-A No. 11-153703, U.S. Patent No. 6210858 and JP-A No. 2002-2776069.

Examples of the material used for forming a matrix include conventionally known thermoplastic resins and curable resin films.

Moreover, it is preferable to use at least one composition selected from a polyfunctional compound containing compositions in which two or more radically polymerizable and/ or cationic polymerizable groups are contained, a hydrolyzable group containing organic metal compounds, and partially condensate compositions thereof. Examples of the compositions include the compounds described in JP-A Nos. 2000-47004, 2001-315242, 2001-31871 and 2001-296401.

Furthermore, colloidal metal oxide obtainable from hydrolyzed condensate of metal alkoxide and a curable film obtainable from a metal alkoxide composition are also preferable. Examples thereof include the curable film described in JP-A No. 2001-293818.

The refractive index of the high-refractive index layer is preferably 1.70 to 2.20. The thickness of the high refractive index layer is preferably 5 nm to 10 μm and more preferably 10 nm to 1 μm.

The refractive index of the medium refractive index layer is controlled so as to be a value between the refractive index of the low refractive index layer and that of the high refractive index layer. The refractive index of the medium refractive index layer is preferably 1.50 to 1.70. The thickness of the medium refractive index layer is preferably 5 nm to 10 μm and more preferably 10 nm to 1 μm.

-Low-refractive index layer-

The low-refractive index layer is preferably laminated on the high-refractive index layer. The refractive index of the low-refractive index layer is preferably 1.20 to 1.55 and more preferably 1.30 to 1.50.

The low-refractive index layer is preferably structured as the outermost surface layer to obtain abrasion resistance and antifouling performance. As a method of greatly increasing abrasion resistance, it is effective to impart slippage to the outermost surface, and a thin layer doped with a silicone compound or a fluorine-containing compound is preferably used.

The refractive index of the fluorine-containing compound is preferably 1.35 to 1.50 and more preferably 1.36 to 1.47. For the fluorine-containing compound, a compound containing fluorine atom in the range of 35% by mass to 80% by mass and containing a crosslinkable or polymerizable functional group is preferable.

Examples thereof include the compounds described in paragraph Nos. [0018] to [0026] in JP-A No. 9-222503, paragraph Nos. [0019] to [0030] in JP-A No. 11-38202, paragraph Nos. [0027] to [0028] in JP-A No. 2001-40284, and JP-A Nos. 2000-284102 and 2004-45462.

As the silicone compound, a compound having a polysiloxane structure is preferably used. Among such compound, the one containing a curable functional group or a polymerizable functional group in a high-molecular chain to have a crosslinked structure in a film is particularly preferable. Examples thereof include reactive silicone, such as SYRAPLANE (manufactured by CHISSO CORPORATION), polysiloxane containing a silanol group at both ends thereof (JP-A No. 11-258403), and the like.

The crosslinking reaction or polymerization reaction of a polymer containing fluorine and/or siloxane having a crosslinkable or polymerizable group is preferably carried out by irradiating with light and/or heating a coating composition used for forming the outermost surface layer containing a polymerization initiator, a sensitizer and the like, at the same time of the coating process or after the coating process. As the polymerization initiator and the sensitizer, those known in the art can be used.

Furthermore, for the low-refractive index layer, a sol-gel cured film, which is cured by subjecting an organic metal compound such as a silane coupling agent and a silane coupling agent containing a specific fluorine-containing hydrocarbon group to a condensation reaction in co-presence of a catalyst, is preferable. Examples thereof include polyfluoroalkyl group-containing silane compounds or partially hydrolyzed condensates (such as the compounds described in JP-A Nos. 58-142958, 58-147483, 58-147484,9-157582 and 11-106704); and silyl compounds containing a poly-perfluoroalkylether group that is a fluorine-containing long-chain group (such as the compounds described in JP-A Nos. 2000-117902, 2001-48590 and 2002-53804).

It is preferable that the low-refractive index layer contains a low-refractive index inorganic compound having an average primary particle diameter of 1 nm to 150 nm such as fillers (for example, silicon dioxide, silica; and fluorine-containing particles such as fluorinated magnesium, fluorinated calcium, and fluorinated barium) as additives other than those described above.

Particularly, it is preferable to use a hollow inorganic fine particle in the low-refractive index layer so as to further suppress the increase of refractive index. The refractive index of the hollow inorganic fine particle is preferably 1.17 to

1.40, more preferably 1.17 to 1.37, and furthermore preferably 1.17 to 1.35. The refractive index described here indicates a refractive index of an entire particle and does not indicate a refractive index of only the outer-shell forming the hollow inorganic fine particle.

The average particle diameter of the hollow inorganic fine particle in the low-refractive index layer is preferably 30 % to 100 %, more preferably 35% to 80 %, and still more preferably 40% to 60% of the thickness of the low-refractive index layer.

Specifically, when the thickness of the low-refractive index layer is 100 nm, the particle diameter of the inorganic fine particle is preferably 30 nm to 100 nm, more preferably 35 nm to 80 nm, and still more preferably 40 nm to 60 nm.

The refractive index of the hollow inorganic fine particle can be measured in the following manner that the hollow inorganic fine particles are mixed in a suitable matrix polymer to form a film.

The refractive index of the film is measured by means of Abbe Refractometer (manufactured by Atago Co., Ltd.).

As the other additives, the low-refractive index layer may contain the organic fine particles described in paragraph Nos. [0020] to [0038] of JP-A No. 11-3820, a silane coupling agent, a lubricant, a surfactant and the like.

When the low-refractive index layer is positioned as an under layer of the outermost surface layer, the low-refractive index layer may be formed by a gas-phase method (for example, a vacuum evaporation method, sputtering method, ion-plating method, and plasma CVD method), however, it is preferably formed by a coating method, in view of a low production cost.

The thickness of the low-refractive index layer is preferably 30 nm to 200 nm, more preferably 50 nm to 150nm, and still more preferably 60 nm to 120 nm.

As the aforementioned other layers, the front window of means of traveling may contain, for example, a hard coat layer, a forward scattering layer, a primer layer, an antistatic layer, an undercoat layer, a protective layer, and the like, if necessary.

-Use and the like of the front window of means of traveling-

As has been mentioned above, the front window of means of traveling can be suitably used as a glass window or wind shield of means of traveling such as a car, a bus, a truck, a train, a bullet train, an aircraft, a passenger aircraft, a ship, and the like, as it has the polarizing film in which the major axis of the anisotropic absorber is substantially horizontally orientated to the plane of the base, and has excellent light-fastness and excellent optical anisotropy (anisotropic absorbance, anisotropic scattering, polarization, birefringence, and the like). Other than the use for the means of traveling, the front window of the present invention can be widely used in various fields, such as construction glass, e.g. openings, partitions, and the like, of buildings such as conventional housings, complex housings, office buildings, shops, public facilities, factories, and the like.

As explained above, in the case where the front window of means of traveling of the present invention is used as a wind shield of means of traveling such as a car or the like, the front window of means of traveling of the present invention can prevent background reflections such as reflections of structures inside the car, and thus the front visibility of the driver can be maintained for the safety. Moreover, the front window of means of traveling of the present invention allows an application of a highly designable dashboard using bright colors or patterns, which has not been able to apply in the conventional car.

The present invention provides a polarizing film for a window, which is suitably used as a front window of means of traveling such as a car, improves a safety as a result of significantly improved the total effect of antireflection, has an excellent light fastness, and improves aesthetic designs of dashboard by preventing reflections of the images of the components of car interior caused by back side reflection. The present invention also provides a front window of means of traveling using the aforementioned polarizing film for a window.

Examples

Hereinafter, the examples of the present invention will be described, which however shall not be construed as limiting the invention thereto.

(Example 1)

<Preparation of glass attached with a polarizing film in which gold nanorod is orientated in accordance with a guest-host liquid crystal method>

-Preparation of an orientation film-

On a clean white plate glass having a side length of 30 cm and a thickness of 6.0 mm, polyvinyl alcohol (PVA)

coating solution (methanol solution) of an orientation film was coated by spin coating at 1,000 rpm for 30 seconds, and then the coated layer was dried at 100°C for 3 minutes so as to prepare a PVA film having a thickness of 1.0 μm. The surface of the PVA film was subjected to a rubbing treatment twice by means of a rubbing machine (manufactured by Joyo Engineering Co., Ltd., a revolution speed of 1,000 rpm, an elevation height of 0.35 mm), to thereby prepare a PVA orientation film.

-Preparation of a coating solution of a polarizing film-

To a liquid crystal solution in which 3.04 grams of a liquid crystal compound having a photopolymerizable group (product name: PALIOCOLOR LC242, manufactured by BASF Japan Ltd.) had been dissolved in 5.07 grams of methylethylketone (MEK), there was added 1.11 grams of an initiator solution (a solution in which 0.90 grams of IRGACURE 907 (manufactured by Chiba Japan K.K.) and 0.30 grams of KAYACURE DETX (manufactured by Nippon Kayaku Co. Ltd.) had been dissolved in 8.80 grams of methylethylketone (MEK)), then the mixture was stirred for 5 minutes so as to completely dissolve the solutes.

To the thus obtained solution, there was added 2.5 grams of 5.0% by mass toluene solution of gold nanorod (product name: Au-3, manufactured by Mitsubishi Material o., Ltd., major axis length: 27 nm, minor axis length: 13 nm, aspect ratio: 2.1), and the mixture was stirred for 5 minutes to thereby prepare a coating solution of a polarizing film.

-Orientating and curing of gold nanorod-

The thus obtained coating solution of the polarizing film was spincoated on the PVA orientation film at 500 rpm for 15 seconds, and the thus obtained coated layer was heated by placing the coated layer on a hot plate so as to contact an opposite side of the film to the surface of the coated layer with the hot place at 90°C for 1 minute. Thereafter, the coated layer was exposed to ultraviolet (UV) radiation (high-pressure mercury lamp, 1kW, 330 $mJ/mm^2$) while being heated, to thereby form a polarizing film having a thickness of 2.5 μm, in which the gold nanorod was orientated.

<Orientation of gold nanorod>

A cut piece was taken from the thus obtained polarizing film and the cut piece was observed under a transmission electron microscope (TEM) (JEM-2010, manufactured by NEOL Ltd.), then it was found that, among 500 pieces of the nanorod, 80% by number or more of them were orientated at ±10 degrees to the glass face (horizontal face).

-Formation of an antireflection film-

An antireflection film was formed on the thus obtained polarizing film as described below. In this manner, the glass attached with the polarizing film in which the gold nanorod was orientated of Example 1 was prepared.

<Formation of an antireflection film>

In a vacuum chamber, metal titanium (Ti) and n-Si (phosphor-doped monocrystal) having specific resistance of 1.2 Ω·cm were disposed on a cathode as a target, and the gas present in the vacuum chamber was removed till the inner atmospheric pressure was reached at $1.3 \cdot 10^{-3}$ Pa ($1 \cdot 10^{-5}$ Torr). Onto a transparent soda lime glass substrate (thickness: 2 mm) disposed in the vacuum chamber, an antireflection film was formed on the polarizing film in the following manner.

(1) At first, a mixed gas (10% nitrogen) of argon and nitrogen was introduced as a discharge gas, and the conductance was adjusted so that the pressure was to be 0.27 Pa ($2 \cdot 10^{-3}$ Torr). Sequentially, negative DC voltage was applied to the cathode of Ti, then there was formed a titanium nitride film (light absorption film, extinction coefficient in the region of visible light: 0.5 or more, extinction coefficient at wavelength of 550 nm: 1.26, refractive index: 1.9) having a thickness of 7.2 nm as a result of DC sputtering of Ti target.
(2) The introduction of the gas was terminated and the inner atmosphere was controlled at the state of high vacuum in the vacuum chamber, then a mixed gas (33% nitrogen) of argon and nitrogen was introduced as a discharge gas and the conductance was adjusted so that the pressure was to be 0.27 Pa ($2 \cdot 10^{-3}$ Torr). Sequentially, pulsed DC voltage was applied to the cathode of Si from a DC source via SPARCLE-V (manufactured by Advanced Energy Industries Inc.), then there was formed a transparent silicon nitride film (transparent nitride film, extinction coefficient at wavelength of 550 nm: 0.01, refractive index: 1.93) having a thickness of 5 nm as a result of intermittent DC sputtering of Si target.
(3) The introduction of the gas was terminated and the inner atmosphere was controlled at the state of high vacuum

in the vacuum chamber, then an oxygen gas (100%) of was introduced as a discharge gas and the conductance was adjusted so that the pressure was to be 0.27 Pa ($2 \cdot 10^{-3}$ Torr). Sequentially, pulsed DC voltage was applied to the cathode of Si from a DC source via SPARCLE-V (manufactured by Advanced Energy Industries Inc.), then there was formed a silicon oxide film (oxide film, refractive index at wavelength of 550 nm: 1.47) having a thickness of 122 nm as a result of intermittent DC sputtering of Si target.

-Evaluation of optical characteristics-

The thus obtained glass attached with the polarizing film was evaluated in terms of its characteristics in the following manner. The results are shown in Table 1.

<Evaluation of background reflections>

As shown in FIG. 7, the prepared glass with polarizing film 11 was fixed on a soda-lime glass 12 having a thickness of 6 mm so as to make the side of the polarizing film face down and to have an angle of 30 degree to a horizontal standard plane, and it was exposed with the light having a wavelength of 632.8 nm emitted from a light source 10 (He-Ne laser) and the power received with a photodetector 13 was measured. The background reflections were evaluated by representing the amount of the reduced light with dB comparing with the case of raw glass as an index. As the photodetector 13, an optical sensor (AQ2741, Ando Electric Co., Ltd.) was used and it was placed in Multimeter AQ2140 via OPM unit AQ2730.

<Evaluation of light fastness>

The exposure test was conducted by using an ultrahigh pressure mercury lamp. The light fastness was evaluated by the variations of the value of the background reflections after 1,000 hours from the exposure.

<Measurement of reduction rate of s-polarized light>

The polarizing film for a window was inserted in between a polarizer and a photodetector, as a sample, then a light emitted from a white light source was made completely polarized by passing through the polarizer such as a polar core or the like, and the amount of the completely polarized light was measured by the photodetecter after passing the completely polarizing light through the sample. In the same condition, the sample was rotated in the plane direction, and the changes in the amount of the light were observed. The maximum amount $I_0$ of the transmitted light and the minimum amount h of the transmitted light were measured, and a reduction rate (k%) of an s-polarized light was calculated by the following formula:

$$k(\%) = 100 \cdot (I_1 / I_0)$$

Note that, 100% of the reduction rate indicates that an s-polarized light has not reduced at all.

(Example 2)

<Preparation of glass with a polarizing film in which gold nanorod is orientated>

-Preparation of an orientation film-

On a surface of a clean triacetyl cellulose (TAC) film (manufactured by Fiji Photo Film Co., Ltd.) having a thickness of 100 μm, polyvinyl alcohol (PVA) coating solution (methanol solution) of an orientation film was coated by bar coating, and then the coated layer was dried at 100°C for 3 minutes so as to prepare a PVA film having a thickness of 1.0 μm. The surface of the PVA film was subjected to a rubbing treatment twice by means of a rubbing machine (manufactured by Joyo Engineering Co., Ltd., a revolution speed of 1,000 rpm, an elevation height of 0.35 mm), to thereby prepare a PVA orientation film.

The polarizing film in which a gold nanorod was orientated was prepared in the same manner as in Example 1, provided that the thus obtained TAC base having the PVA orientation film thereon was used as a base.

<Orientation of gold nanorod>

A cut piece was taken from the thus obtained polarizing film and the cut piece was observed under a transmission electron microscope (TEM) (JEM-2010, manufactured by NEOL Ltd.), then it was found that, among 500 pieces of nanorod, 80% by number or more of them were orientated at ±10 degrees to the base (horizontal face). Moreover, among 500 pieces of nanorod, 80% by number or more of them were orientated at ±10 degrees to the length direction of the base (horizontal face).

Thereafter, an antireflection film was formed on the thus obtained polarizing film in the same manner as in Example 1 to thereby prepare the film with the polarizing film for a window of Example 2.

The various characteristics of the thus obtained film with the polarizing film were evaluated in the same manner as in Example 1. The results are shown in Table 1.

(Example 3)

<Preparation of a film with a polarizing film in which a carbon nanotube is orientated in accordance with a guest-host method>

A polarizing film in which a carbon nanotube was orientated was prepared in the same manner as in Example 2, provided that the following coating solution of the polarizing film containing a carbon nanotube was used, and the orientating and curing of the carbon nanotube were carried out.

-Preparation of a coating solution of a polarizing film-

To a liquid crystal solution in which 3.04 grams of a liquid crystal compound having a photopolymerizable group (product name: PALIOCOLOR LC242, manufactured by BASF Japan Ltd.) had been dissolved in 5.07 grams of methylethylketone (MEK), there was added 1.11 grams of an initiator solution (a solution in which 0.90 grams of IRGACURE 907 (manufactured by Chiba Japan K.K.) and 0.30 grams of KAYACURE DETX (manufactured by Nippon Kayaku Co. Ltd.) had been dissolved in 8.80 grams of methylethylketone (MEK)), then the mixture was stirred for 5 minutes so as to completely dissolve the solutes.

To the thus obtained solution, there was added 1.0 gram of carbon nanotube (manufactured by Sigma-Aldrich Japan K.K., major axis length: 300-500 nm, minor axis length: 5-10 nm, aspect ratio: 30-100), and the mixture was stirred for 30 minutes so as to disperse the carbon nanotube, to thereby prepare a coating solution of a polarizing film.

-Orientating and curing of carbon nanotube-

The thus obtained coating solution of the polarizing film was bar-coated, and the thus obtained coated film was heated by placing the coated layer on a hot plate so as to contact an opposite surface of the film to the surface of the coated layer with the hot place at 90°C for 1 minute. Thereafter, the coated layer was exposed to ultraviolet (UV) radiation (high-pressure mercury lamp, 1kW, 330 mJ/mm$^2$) while being heated, to thereby form a polarizing film having a thickness of 3.4 $\mu$m, in which the carbon nanotube was orientated.

<Orientation of carbon nanotube>

A cut piece was taken from the thus obtained polarizing film and the cut piece was observed under a transmission electron microscope (TEM) (JEM-2010, manufactured by NEOL Ltd.), then it was found that, among 500 pieces of carbon nanotube, 80% by number or more of them were orientated at ±10 degrees to the glass face (horizontal face). Moreover, withing 500 pieces carbon nanotube, 80% by number or more of them were orientated at ±10 degrees to the length direction of the base (horizontal face).

Thereafter, an antireflection film was formed on the thus obtained polarizing film in the same manner as in Example 1 to thereby prepare the film attached with the polarizing film.

The various characteristics of the thus obtained film attached with the polarizing film were evaluated in the same manner as in Example 1. The results are shown in Table 1.

(Example 4)

<Preparation of a film attached with a polarizing film in which gold nanorod is orientated in accordance with a drawing method>

-Synthesize of gold nanorod-

A gold nanorod was synthesized with reference to a seed-mediated method proposed by C. J. Murphy and the like [J. Phys. Chem. B,105, 4065 (2001)].

At first, 0.25 mL of 0.01 mol aqueous solution of $HAuCl_4$ was added to a surfactant, i.e. 7.5 mL of 0.1 mol aqueous solution of trimethyl ammonium bromide (CTAB), and the mixture was stirred for 5 minutes. Thereafter, an ice-cold reducing agent, i.e. 0.6 mL of 0.01 mol aqueous solution of $NaBH_4$ was added thereto at a stretch, and the mixture was intensely stirred for 1 minute so that the color of the solution changed from pale yellow to pale brawn, to thereby obtain gold nano particles which were seeds for gold nanorod.

Sequentially, into the mixed solution of 4.75 mL of 0.1 mol CTAB aqueous solution, 0.2 mL of 0.01 mol $HAuCl_4$ aqueous solution and 0.03 mL of 0.01 mol $AgNO_3$ aqueous solution, there was added 0.032 mL of 0.1 mol aqueous solution of ascorbic acid, and the mixture was stirred, then the color of the solution was changed from pale brawn to transparent. To this reaction solution, there was added 0.01 mL of the seed particle solution, and slowly shook a few times. Thereafter, the solution was left to stand for 12 hours, and then the color of the solution was changed to reddish violet, to thereby obtain a gold nanorod aqueous solution.

Since the thus obtained gold nanorod aqueous solution contained CTAB which was a surfactant, the solution was purified by means of an ultracentrifuge. After subjecting the solution to the centrifugation at 14,000 rpm for 12 minutes, the gold nanorod was sedimentated. Therefore, the supernatant liquid was removed and pure water was added, and then the solution was further subjected to the centrifugation at 14,000 rpm for 12 minutes. This procedure was repeated three times. Thereafter, the supernatant liquid was removed to thereby obtain a concentrated aqueous solution of gold nanorod.

The thus obtained concentrated aqueous solution of gold nanorod was observed under transmission electron microscope (TEM) (JEM-2010, manufactured by NEOL Ltd.), and it was found that the gold nanorod had substantially uniform shape, namely a miner axis length of 12 nm, major axis length of 45 nm, and aspect ratio of 3.8.

-Preparation of polyvinyl alcohol aqueous solution in which gold nanorod is dispersed-

Polyvinyl alcohol (PVA-235, manufactured by Kuraray Co., Ltd., saponification degree: 88%, mass average polymerization degree: 3,500) was dissolved in pure water so as to prepare 7.5% by mass of aqueous solution. To this solution, there was added 0.5 grams of the above-synthesized gold nanorod aqueous solution, and the mixture was stirred so as to prepare a polyvinyl alcohol aqueous solution in which the gold nanorod was stably dispersed.

-Preparation of a polarizing film containing gold nanorod-

The polyvinyl alcohol aqueous solution in which the gold nanorod was dispersed was coated on a polyethylene terephthalate (PET) film having a thickness of 100 $\mu$m by bar-coating. The coated layer was dried at 45°C for 30 minutes to thereby prepare a thin film having a thickness of 200 $\mu$m in dry basis. The thin film was removed from the PET film, and was subjected to monoaxial drawing under the condition of 60°C and 50% RH by means of a monoaxial drawing machine until the size thereof became 6 times larger, to thereby obtain a polarizing film in which the gold nanorod was orientated.

<Orientation of gold nanorod>

A cut piece was taken from the thus obtained polarizing film and the cut piece was observed under a transmission electron microscope (TEM) (JEM-2010, manufactured by NEOL Ltd.), then it was found that, among 500 pieces of gold nanorod, 80% by number or more of them were orientated at $\pm$10 degrees to the plane of the base (horizontal face). Moreover, among 500 pieces of gold nanorods, 80% by number or more of them were orientated at $\pm$10 degrees to the length direction of the base (horizontal face).

Thereafter, an antireflection film was formed on the thus obtained polarizing film containing the gold nanorod therein in the same manner as in Example 1 to thereby prepare the film attached with the polarizing film of Example 4.

The various characteristics of the thus obtained film with the polarizing film were evaluated in the same manner as in Example 1. The results are shown in Table 1.

(Example 5)

<Preparation of a film attached with a polarizing film in which carbon nanotube is orientated in accordance with a drawing method>

-Preparation of polyvinyl alcohol aqueous solution in which gold carbon nanotube is dispersed-

1.0 gram of polyvinyl alcohol (PVA-235, manufactured by Kuraray Co., Ltd., saponification degree: 88%, mass average polymerization degree: 3,500) was dissolved in 3.0 mL of pure water so as to prepare 7.5% by mass of aqueous solution. To this solution, there was added 0.05 grams of carbon nanotube to which sulfonic group was introduced on the surface thereof (manufactured by Sigma-Aldrich Japan K.K., major axis length: 100-300 nm, minor axis length: 3-5 nm, aspect ratio: 20-100), and the mixture was subjected to ultrasonic oscillation for 1 hour, and was further stirred so as to prepare a coating solution of a polarizing film in which the carbon nanotube was stably dispersed.

-Orientating and curing carbon nanotube-

The polyvinyl alcohol aqueous solution in which the carbon nanotube was dispersed was coated on a polyethylene terephthalate (PET) film having a thickness of 100 μm by bar-coating. The coated layer was dried at 45°C for 30 minutes to thereby prepare a thin film having a thickness of 200 μm in dry basis. The thin film was removed from the PET film, and was subjected to monoaxial drawing under the condition of 60°C and 50% RH by means of a monoaxial drawing machine until the size thereof became 5 times larger, to thereby obtain a polarizing film in which the carbon nanotube was orientated.

<Orientation of carbon nanotube>

A cut piece was taken from the thus obtained polarizing film and the cut piece was observed under a transmission electron microscope (TEM) (JEM-2010, manufactured by NEOL Ltd.), then it was found that, among 500 pieces of carbon nanotube, 80% by number or more of them were orientated at ±10 degrees to the plane of the base (horizontal face). Moreover, among 500 pieces of carbon nanotube, 80% by number or more of them were orientated at ±10 degrees to the drawn direction of the polarizing film.

Thereafter, an antireflection film was formed on the thus obtained polarizing film containing the carbon nanotube therein in the same manner as in Example 1 to thereby prepare the film attached with the polarizing film of Example 5.

The various characteristics of the thus obtained film with the polarizing film were evaluated in the same manner as in Example 1. The results are shown in Table 1.

(Example 6)

-Preparation of laminated glass-

The polarizing film of Example 2 was sandwiched with two sheets of transparent float glass, and the thus obtained laminate structure was placed in a rubber bag and degassed at vacuum of 2,660 Pa for 20 minutes. The rubber bag was moved to an oven while being degassed, and was vacuum-pressed while maintaining the temperature at 90°C for 30 minutes. The preliminary pressed laminated glass was pressed in an autoclave for 20 minutes under the conditions of the temperature being 135°C and pressure being 118 $N/cm^2$, to thereby obtain a laminated glass.

Thereafter, an antireflection film was formed on the thus obtained laminated glass in the same manner as in Example 1 to thereby prepare the glass attached with the polarizing film of Example 6.

The various characteristics of the thus obtained glass with the polarizing film were evaluated in the same manner as in Example 1. The results are shown in Table 1.

(Example 7)

-Preparation of laminated glass-

The polarizing film of Example 3 was sandwiched with two sheets of transparent float glass, and the thus obtained laminate structure was placed in a rubber bag and degassed at vacuum of 2,660 Pa for 20 minutes. The rubber bag was moved to an oven while being degassed, and was vacuum-pressed while maintaining the temperature at 90°C for 30 minutes. The preliminary pressed laminated glass was pressed in an autoclave for 20 minutes under the conditions of the temperature being 135°C and pressure being 118 $N/cm^2$, to thereby obtain a laminated glass.

Thereafter, an antireflection film was formed on the thus obtained laminated glass in the same manner as in Example 1 to thereby prepare the glass attached with the polarizing film of Example 7.
The various characteristics of the thus obtained glass with the polarizing film were evaluated in the same manner as in Example 1. The results are shown in Table 1.

(Example 8)

A glass attached with a polarizing film of Example 8 was prepared in the same manner as in Example 6, provided that an iodine-PVA polarizing plate (manufactured by Sanritz Corporation) was used as a polarizing film.
The various characteristics of the thus obtained glass attached with the polarizing film were evaluated in the same manner as in Example 1. The results are shown in Table 1.

(Comparative Example 1)

A glass attached with an antireflection film of Comparative Example 1 was prepared in the same manner as in Example 1, provided that the polarizing film in which gold nanorod was orientated was not disposed.
The various characteristics of the thus obtained glass attached with the antireflection film were evaluated in the same manner as in Example 1. The results are shown in Table 1.

(Comparative Example 2)

A film of Comparative Example 2 was prepared in the same manner as in Example 4, provided that the drawing treatment was not performed on the polarizing film containing the gold nanorod.
A cut piece was taken from the thus obtained polarizing film containing the gold nanorod and the cut piece was observed under a transmission electron microscope (TEM) (JEM-2010, manufactured by NEOL Ltd.), then it was found that the major axes of the gold nanorods were not orientated in a certain direction and the orientation thereof was random.
The various characteristics of the thus obtained film of Comparative Example 2 were evaluated in the same manner as in Example 1. The results are shown in Table 1.

(Comparative Example 3)

A film of Comparative Example 3 was prepared in the same manner as in Example 5, provided that the drawing treatment was not performed on the polarizing film containing the carbon nanotube.
A cut piece was taken from the thus obtained polarizing film containing the carbon nanotube and the cut piece was observed under a transmission electron microscope (TEM) (JEM-2010, manufactured by NEOL Ltd.), then it was found that the major axes of the carbon nanotubes were not orientated in a certain direction and the orientation thereof was random.
The various characteristics of the thus obtained film of Comparative Example 3 were evaluated in the same manner as in Example 1. The results are shown in Table 1.

[Table 1]

| | Background reflections (dB) | Light fastness (dB) | Reudction rate of s-polarized light (%) |
|---|---|---|---|
| Ex. 1 | -3.2 | -3.2 | 72 |
| Ex. 2 | -3.3 | -3.1 | 72 |
| Ex. 3 | -3.4 | -3.1 | 64 |
| Ex. 4 | -1.6 | -1.3 | 76 |
| Ex. 5 | -1.5 | -1.3 | 76 |
| Ex. 6 | -3.3 | -3.3 | 72 |
| Ex. 7 | -3.4 | -3.4 | 64 |
| Ex. 8 | -4.5 | -1.1 | 0.02 |
| Com. Ex. 1 | -0.7 | -0.7 | 100 |
| Com. Ex. 2 | -0.4 | -0.4 | 100 |

(continued)

| | Background reflections (dB) | Light fastness (dB) | Reudction rate of s-polarized light (%) |
|---|---|---|---|
| Com. Ex. 3 | -0.4 | -0.4 | 100 |

Industrial Applicability

The polarizing film for a window and front window of means of traveling of the present invention are suitably used for a wind shield of means of traveling such as a car. Since the polarizing film for a window and the front window of means of traveling of the present invention prevent reflections of interior structures caused by back reflections, the excellent safety can be provided and it enables to apply a highly designable dashboard having bright colors or patterns which have not been able to apply in the conventional means of traveling. Accordingly, the polarizing film for a window and front window of means of traveling of the present invention can be suitably for various uses, such as a front window of various means of traveling such as a car, a train, a bullet train, an aircraft, and the like.

## Claims

1. A polarizing film for a window, comprising at least:

   an anisotropic absorber,
   wherein the polarizing film has a reduction ratio of horizontally polarized light (s-polarized light) included in incident light of 90% or less.

2. The polarizing film for a window according to claim 1, wherein the anisotropic absorber has an average aspect ratio of 1.5 or more, and the anisotropic absorber is orientated so that a major axis of the anisotropic absorber and a horizontal plane of the polarizing film are horizontal.

3. The polarizing film for a window according to claim 2, wherein the major axis of the anisotropic absorber is orientated so as to have an angle of $\pm 30°$ or less with a horizontal plane of the polarizing film.

4. The polarizing film for a window according to any one of claims 1 to 3, wherein the anisotropic absorber is an anisotropic metal nanoparticle, or a carbon nanotube.

5. The polarizing film for a window according to claim 4, wherein a material of the anisotropic metal nanoparticle is at least one selected from the group consisting of gold, silver, copper and aluminum.

6. A front window for means of traveling, comprising at least:

   a base;
   a polarizing film; and
   a antireflection film,
   wherein the polarizing film is the polarizing film as in any one of claims 1 to 5.

7. The front window of means of traveling according to claim 6, wherein a plane of the base and a horizontal standard plane make an angle of 20 degrees to 50 degrees, and an average direction of an absorbance axis of the anisotropic absorber contained in the polarizing film is orientated at an angle of less than $\pm 30$ degrees to a line at which a plane of the base and the horizontal standard plane are crossed.

8. The front window of means of traveling according to any one of claim 6 or 7, wherein the polarizing film is disposed on a surface of the base which faces inside of the means of traveling.

9. The front window of means of traveling according to any one of claims 6 to 8, wherein the antireflection film is disposed at an outermost surface of the front window which faces inside of the means of traveling.

10. The front window of means of traveling according to any one of claims 6 to 9,
    wherein the base is a laminated glass which comprises two sheets of plate glass and an intermediate layer disposed

in between the two sheets of the plate glass, and
wherein the intermediate layer comprises the polarizing film.

**11.** The front window of means of traveling according to any one of claims 6 to 10, wherein the base is a polymer panel article and the polarizing film is disposed on a surface of the base or inside of the base.

**12.** The front window of means of traveling according to any one of claims 6 to 11, wherein the means of traveling is a car.

FIG. 1A

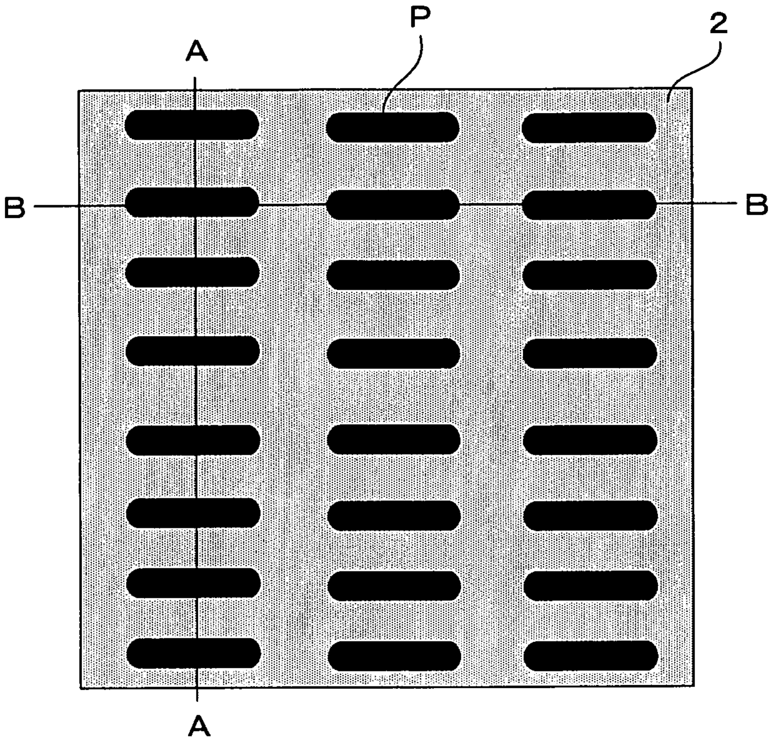


FIG. 1B

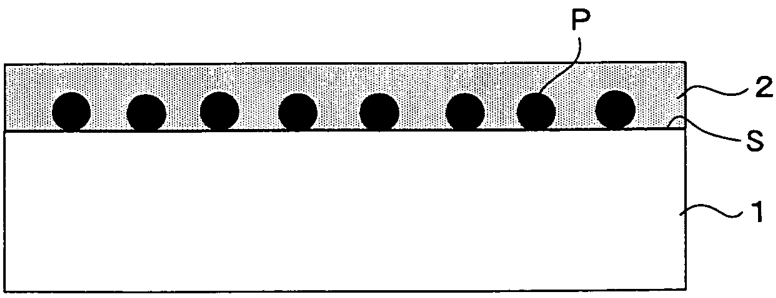

FIG. 1C

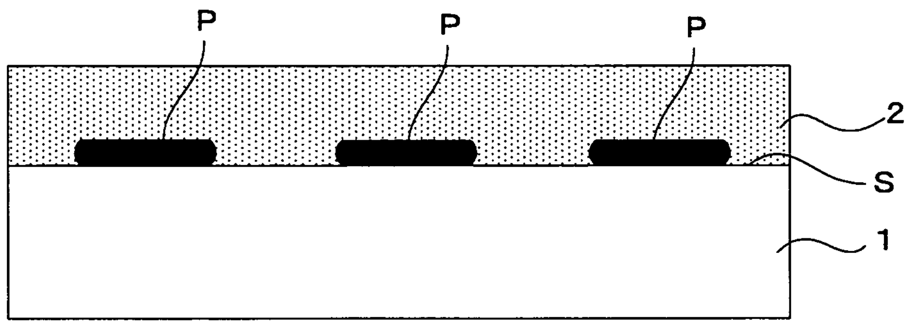


FIG. 1D

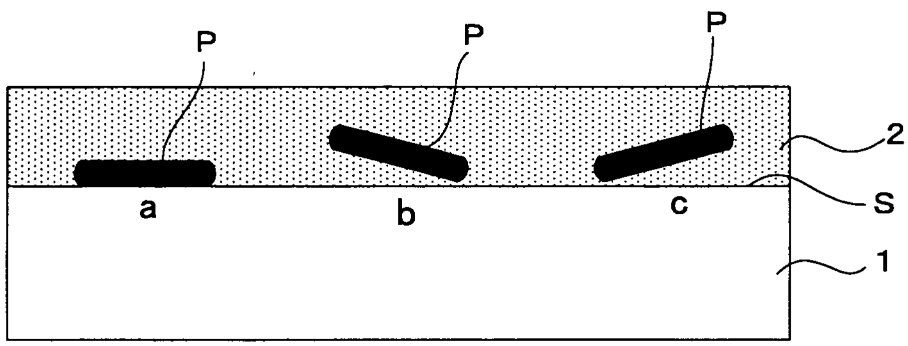

FIG. 2

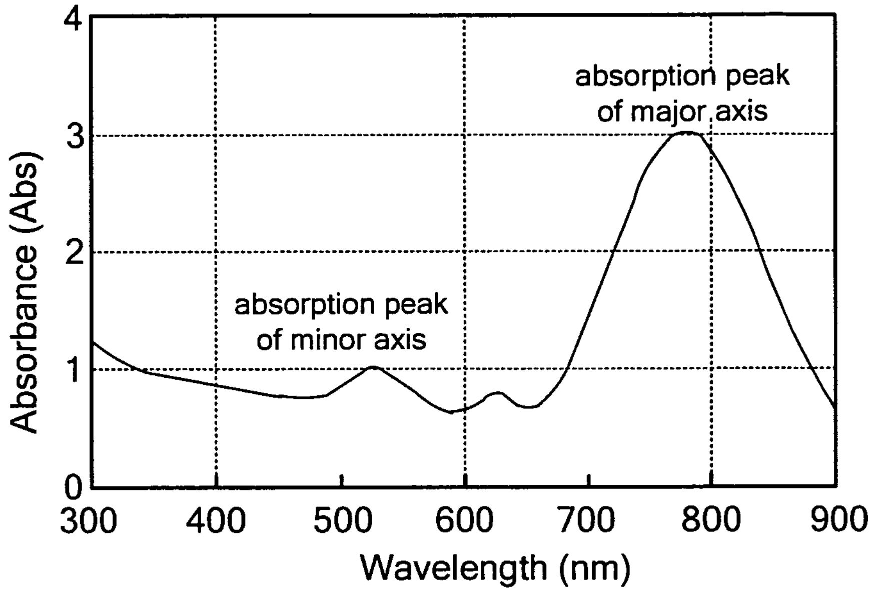
absorption peak
of major axis
absorption peak
of minor axis
Absorbance (Abs)
0
1
2
3
4
300
400
500
600
700
800
900
Wavelength (nm)

FIG. 3

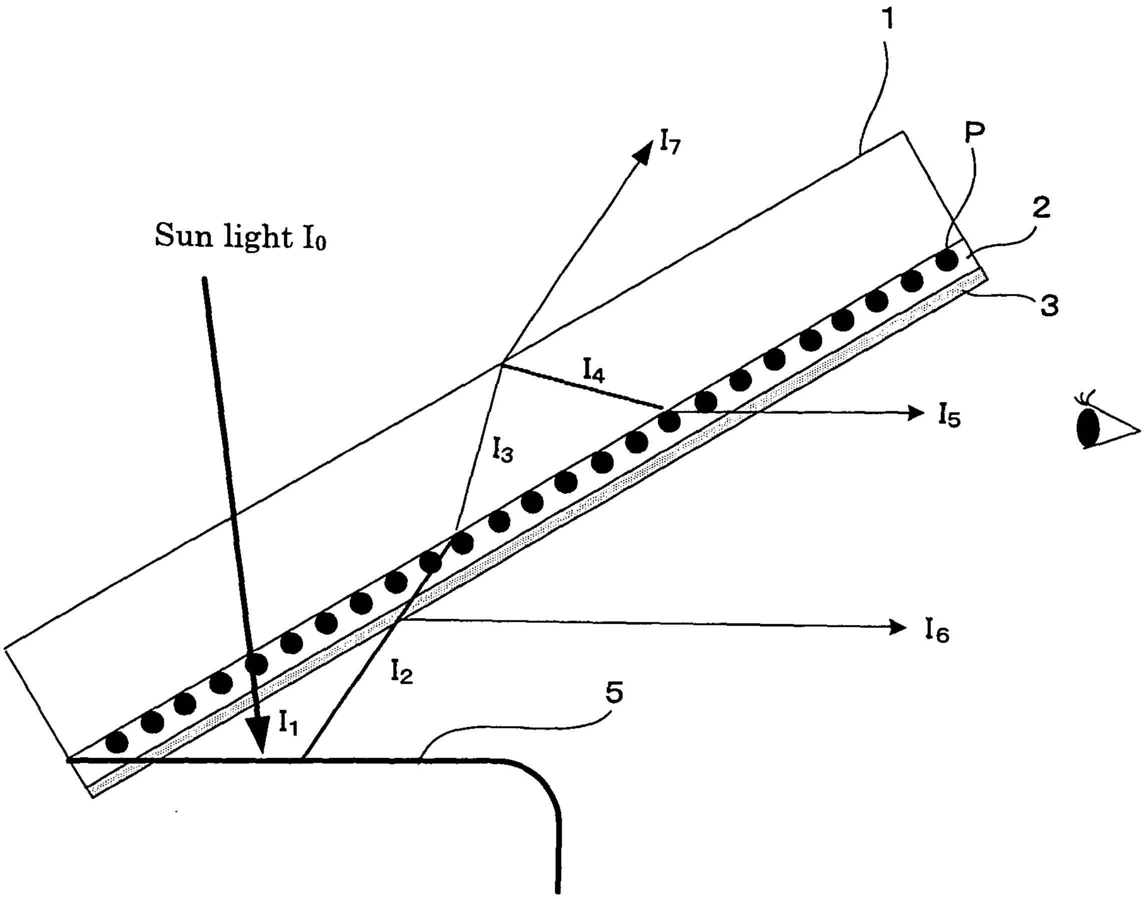

FIG. 4

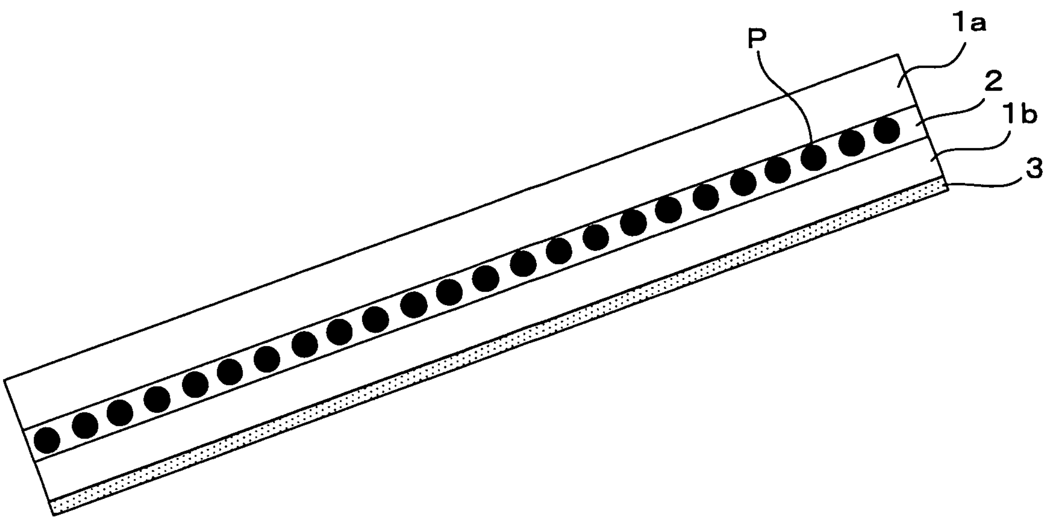


FIG. 5

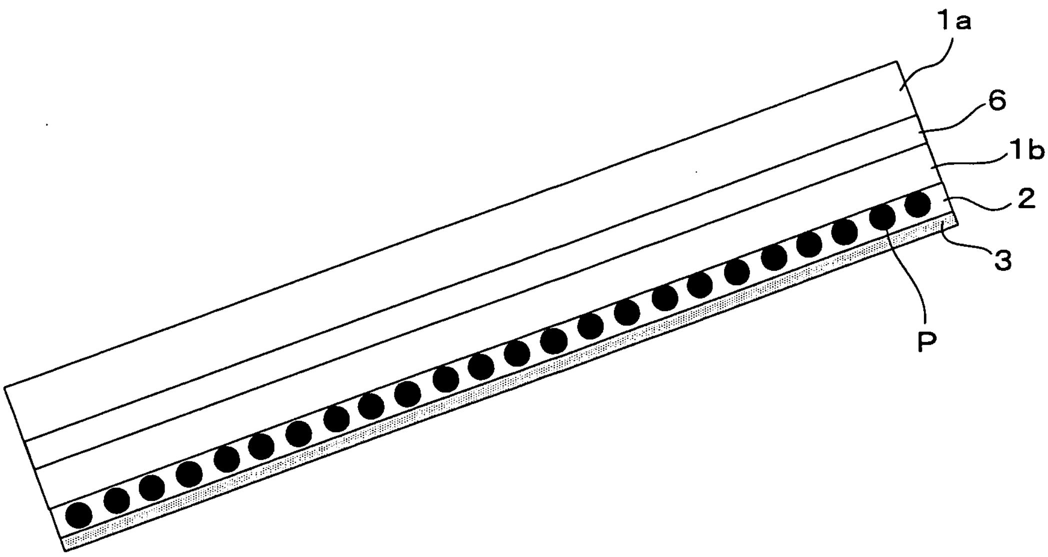

FIG. 6

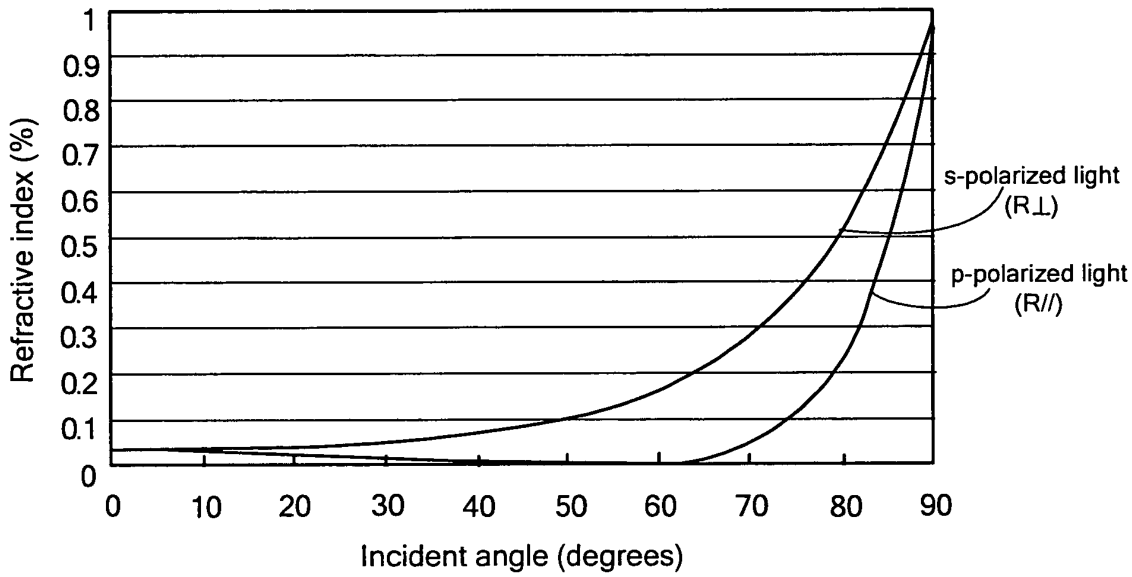
1
0.9
0.8
0.7
0.6
0.5
0.4
0.3
0.2
0.1
0
Refractive index (%)
0
10
20
30
40
50
60
70
80
90
Incident angle (degrees)
s-polarized light
(R⊥)
p-polarized light
(R//)

FIG. 7

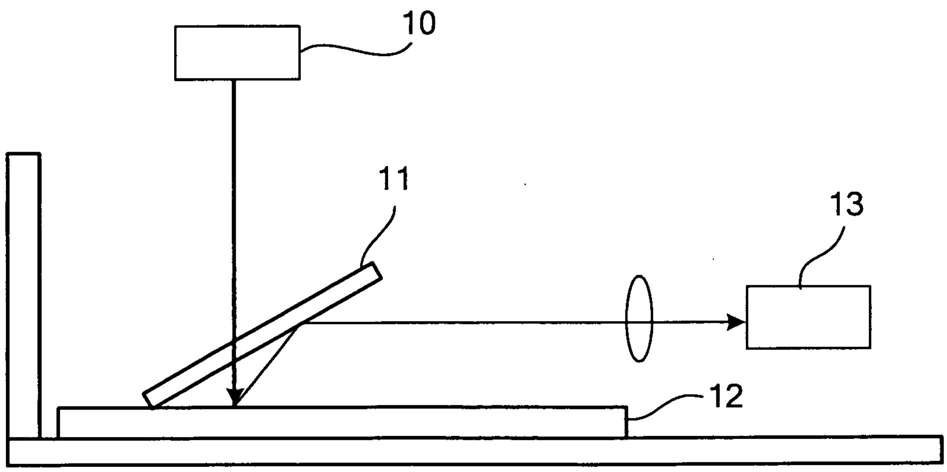
10
11
13
12

**INTERNATIONAL SEARCH REPORT**

International application No.
PCT/JP2007/058565

A. CLASSIFICATION OF SUBJECT MATTER
*G02B5/30*(2006.01)i, *B32B7/02*(2006.01)i, *B60J3/06*(2006.01)i, *C03C27/12*(2006.01)i

According to International Patent Classification (IPC) or to both national classification and IPC

B. FIELDS SEARCHED

Minimum documentation searched (classification system followed by classification symbols)
G02B5/30, B32B7/02, B60J3/06, C03C27/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| Y | JP 49-14507 A (Hikari Seiko Co., Ltd.), 08 February, 1974 (08.02.74), Full text; all drawings (Family: none) | 1-12 |
| Y | JP 7-56018 A (Tokin Corp.), 03 March, 1995 (03.03.95), Par. Nos. [0003] to [0006]; Figs. 1, 6 (Family: none) | 1-12 |
| Y | JP 9-43429 A (Kyocera Corp.), 14 February, 1997 (14.02.97), Claims 1 to 4 & US 5864427 A & EP 744634 A | 1-12 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 May, 2007 (31.05.07) | 12 June, 2007 (12.06.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2007/058565

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-102217 A (Hong Fu Jin Precision Industry (Shen Zhen) Co., Ltd.), 20 May, 2004 (20.05.04), Claims; Par. No. [0018] & US 2004/0047038 A1 & CN 1482472 A | 1-12 |
| A | JP 2000-177381 A (Nippon Sheet Glass Co., Ltd.), 27 June, 2000 (27.06.00), (Family: none) | 6-12 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5069701 U
- JP 4357134 A
- JP 6344437 A
- JP 2001187421 A
- JP 11295503 A
- JP 11153703 A
- JP 2000009908 A
- JP 2001310432 A
- JP 2001166104 A
- US 20030202137 A
- US 6210858 B
- JP 20022776069 A
- JP 2000047004 A
- JP 2001315242 A
- JP 2001031871 A
- JP 2001296401 A
- JP 2001293818 A
- JP 9222503 A
- JP 11038202 A
- JP 2001040284 A
- JP 2000284102 A
- JP 2004045462 A
- JP 11258403 A
- JP 58142958 A
- JP 58147483 A
- JP 58147484 A
- JP 9157582 A
- JP 11106704 A
- JP 2000117902 A
- JP 2001048590 A
- JP 2002053804 A
- JP 11003820 A


### Non-patent literature cited in the description


- **Y.-Y. YU ; S.-S. CHANG ; C.-L. LEE ; C. R. C. WANG.** *J. Phys. Chem. B,* 1997, vol. 101, 6661
- **N.R. JANA ; L. GEARHEART ; C. J. MURPHY.** *J. Phys. Chem. B,* 2001, vol. 105, 4065
- **F. KIM ; J.H. SONG ; P. YANG.** *J. Am. Chem. Soc.,* 2002, vol. 124, 14316
- *Journal of the Liquid Crystal Society of Japan,* 1999, vol. 3 (1), 3
- **MASAKI HASEGAWA.** *Journal of the Liquid Crystal Society of Japan,* 1999, vol. 3 (4), 262
- **C. J. MURPHY.** *J. Phys. Chem. B,* 2001, vol. 105, 4065